Europäisches Patentamt

(19) European Patent Office

Office européen des brevets

(11) Numéro de publication: **0 115 894**
**B1**

(12) **FASCICULE DE BREVET EUROPEEN**

(45) Date de publication du fascicule du brevet:
26.08.87

(51) Int. Cl.⁴: **H 04 Q 11/04, H 04 L 11/16**

(21) Numéro de dépôt: **84200141.4**

(22) Date de dépôt: **03.02.84**

(54) **Système de télécommunication en boucle à multiplex temporel comportant une première et une deuxième lignes de transmission.**

(30) Priorité: **07.02.83 FR 8301866**

(43) Date de publication de la demande:
**15.08.84 Bulletin 84/33**

(45) Mention de la délivrance du brevet:
**26.08.87 Bulletin 87/35**

(84) Etats contractants désignés:
**DE FR GB IT NL**

(56) Documents cités:
**DE - A - 3 012 438**
**FR - A - 2 256 605**
**GB - A - 1 510 462**
**GB - A - 2 050 759**
**GB - A - 2 067 056**

**PHILIPS TELECOMMUNICATION REVIEW, vol.37, no.3, août 1979, pages 170-176, Hilversum, NL; G.DAVID et al.: "An on-board digital transmission system"**
**1976 INTERNATIONAL ZÜRICH SEMINAR ON DIGITAL COMMUNICATIONS, 9-16 mars 1976, session 4, pages 1-5, IEEE, Long Beach (US); E. HAFNER et al.: "Enhancing the availability of a loop system by meshing"**
**TWENTY-FIFTH IEEE COMPUTER SOCIETY INTERNATIONAL CONFERENCE, COMPON 82 FALL, 20-23 septembre 1982, Washington, DC, pages 444-453, IEEE, Los Angeles, (US); A.GOYAL et al.: "Reliability in ring networks"**

(73) Titulaire: **TELECOMMUNICATIONS RADIOELECTRIQUES ET TELEPHONIQUES T.R.T., 88, rue Brillat Savarin, F-75013 Paris (FR)**

(84) Etats contractants désignés: **FR**

(73) Titulaire: **N.V. Philips' Gloeilampenfabrieken, Groenewoudseweg 1, NL-5621 BA Eindhoven (NL)**

(84) Etats contractants désignés: **DE GB IT NL**

(72) Inventeur: **David, Guy Albert Jules, SOCIETE CIVILE S.P.I.D. 209 rue de l'Université, F-75007 Paris (FR)**
Inventeur: **Grima, Jean-Claude, SOCIETE CIVILE S.P.I.D. 209 rue de l'Université, F-75007 Paris (FR)**
Inventeur: **Pando, Bernard, SOCIETE CIVILE S.P.I.D. 209 rue de l'Université, F-75007 Paris (FR)**
Inventeur: **Bretez, Gabriel Charles Ovide, SOCIETE CIVILE S.P.I.D. 209 rue de l'Université, F-75007 Paris (FR)**
Inventeur: **Lommer, Daniel José François, SOCIETE CIVILE S.P.I.D. 209 rue de l'Université, F-75007 Paris (FR)**

(74) Mandataire: **Chaffraix, Jean et al, Société Civile S.P.I.D. 209, rue de l'Université, F-75007 Paris (FR)**

## Description

La présente invention concerne un système de télécommunication en boucle à multiplex temporel comportant une première et une deuxième ligne de transmission pour réunir une succession de circuits de raccordement, ces circuits de raccordement étant munis d'un premier accès amont pour recevoir de l'information de la première ligne de transmission transmettant celle-ci selon un premier sens de transmission et pour la fournir à ces circuits d'abonnés qui leur sont rattachés par l'intermédiaire d'une entrée et d'une sortie de connexion pour circuits d'abonnés, d'un premier accès aval pour restituer l'information sur ladite première ligne de transmission, d'un second accès amont et d'un second accès aval pour être connectés sur la deuxième ligne de transmission, système comportant en outre, couplés à des moyens de détection de défaillance du système par rapport au service normal, des moyens pour engendrer des codes d'ordre en direction des circuits de raccordement pour pallier la défaillance du système par des connexions entre les accès et les entrées-sorties desdits circuits.

Un tel système est décrit dans le brevet français no 2 256 605 déposé au nom de la demanderesse le 26 décembre 1973. Ce système, dès qu'une défaillance est décelée, met en œuvre tout un processus pour rétablir le fonctionnement le plus satisfaisant possible compte tenu de cette défaillance. Ce processus est déclenché quelle que soit la nature de la défaillance.

La présente invention se propose de perfectionner ce dispositif connu en mettant en œuvre des processus plus simples, pour pallier certaines défaillances, notamment, la rupture d'une ligne séparant deux circuits de raccordement.

Pour cela, un système du genre décrit dans le préambule est remarquable en ce qu'il est prévu des moyens de commande pour relier d'une part, en service normal, l'entrée des circuits d'abonnés sur l'un des accès amonts recevant de l'information tandis que la sortie de ces circuits d'abonnés est reliée aux accès avals de sorte que la première ligne de transmission et la deuxième ligne de transmission transmettent de l'information selon ledit premier sens et pour pouvoir relier sous l'influence desdits codes d'ordre l'entrée des circuits d'abonnés sur le deuxième accès aval et la sortie sur le deuxième accès amont, de sorte que la deuxième ligne de transmission transmet de l'information selon le sens inverse dudit premier sens.

Ainsi, par l'invention, la deuxième ligne de transmission est susceptible de transmettre l'information selon ledit premier sens et le sens inverse.

Il convient de noter qu'un système en boucle muni de deux lignes transmettant l'information dans le même sens est décrit dans l'article intitulé: «Enhancing the Availability of a Loop System by Meshing» de E. Hafner et autres, paru dans International Zurich Seminar on Digital Communications, 9–16 mars 1976, session 4, pages D4.1 à D4.5.

La demanderesse a donc réussi à associer les avantages du système décrit dans la demande de brevet précitée avec ceux de ce dernier article en prenant des mesures convenables. Ainsi, selon une caractéristique importante de l'invention, un système de télécommunication dans lequel il est prévu au moins un circuit-pilote, inséré tout comme les circuits de raccordement, comportant couplés à des moyens de détection de défaillance du système, des moyens pour engendrer des codes d'ordre en direction des circuits de raccordement et pilote pour palier la défaillance du système par des connexions entre les accès et les entrée sortie desdits circuits est remarquable en ce que les moyens pour engendrer des codes d'ordre opèrent selon le procédé suivant dit procédé de reconfiguration:

– émission d'un mot d'ordre aval pour tous les circuits de raccordement et pilote pour préparer le retour en sens inverse du sens de transmission précité du signal émis par le circuit pilote,

– émission successive de codes d'ordres aval particulier pour chacun des circuits de raccordement en commençant par celui qui est situé le plus loin pour que le premier circuit qui reçoit cet ordre le retourne via une ligne de transmission vers le circuit pilote, le signal étant ensuite envoyé du côté aval,

– émission successive de codes d'ordre amont particulier pour chacun des circuits de raccordement en commençant par celui situé en aval de celui qui a exécuté le code d'ordre aval particulier,

– mise en service du système à la réception par le circuit pilote du signal du côté amont pour que l'échange d'information en circuits d'abonnés puisse se produire.

On se rend alors compte qu'une ligne de transmission transmet toujours dans le même sens l'information, tandis que l'autre la transmet dans les deux sens selon que le système est en fonctionnement normal ou que le procédé décrit ci-dessus a été exécuté.

Selon une caractéristique importante de l'invention, un système de télécommunication en boucle du genre cité dans le préambule est remarquable en ce qu'au moins une ligne de transmission supplémentaire peut être couplée à la première et/ou à la deuxième ligne et peut se raccorder à des accès supplémentaires prévus sur les circuits de raccordement et pilote.

Ceci rend particulièrement avantageux un tel système lorsqu'il est utilisé dans un milieu agressif et que les ruptures de câbles sont à craindre. C'est le cas, notamment, où le système est placé dans un navire de guerre.

La description suivante faite en regard des dessins annexés, le tout donné à titre d'exemple non limitatif, fera bien comprendre comment l'invention peut être réalisée.

La fig. 1 montre un système de télécommunication conforme à l'invention fonctionnant normalement.

La fig. 2 montre l'organisation du multiplex transmis par le système de télécommunication.

La fig. 3 montre un système de télécommunication reconfiguré après une coupure de câbles.

La fig. 4 montre une partie d'un système de télécommunication conforme à l'invention présentant une multitude de lignes de transmission.

La fig. 5 montre un système de télécommunication en boucle conforme à l'invention comportant notamment, d'une part, deux premières lignes de transmission et deux deuxièmes lignes de transmission et, d'autre part, deux circuits pilotes réunis par une ligne supplémentaire.

La fig. 6 montre en détail le mode de réalisation d'un circuit de raccordement.

Les figures 7, 8 et 9 montrent des ordinogrammes représentant le fonctionnement des circuits de raccordement dont le schéma est montré à la figure 6.

La fig. 10 montre en détail le mode de réalisation d'un circuit pilote.

Les figures 11 et 12 montrent les ordinogrammes représentant le fonctionnement des circuits pilotes dont le schéma est montré à la figure 10.

La fig. 13 montre un ordinogramme représentant un processus de télésurveillance.

Les figures 14a et 14b montrent un ordinogramme représentant un processus de reconfiguration.

Les figures 15, 16, 17, 18, 19 et 20 montrent comment un système de télécommunication se reconfigure après une coupure graves des lignes de transmission.

La fig. 21 montre comment s'organise le système de télécommunication après deux coupures graves des lignes de transmission.

La fig. 22 est destinée à l'explication de la remise en service de circuits de raccordement isolés par deux coupures graves.

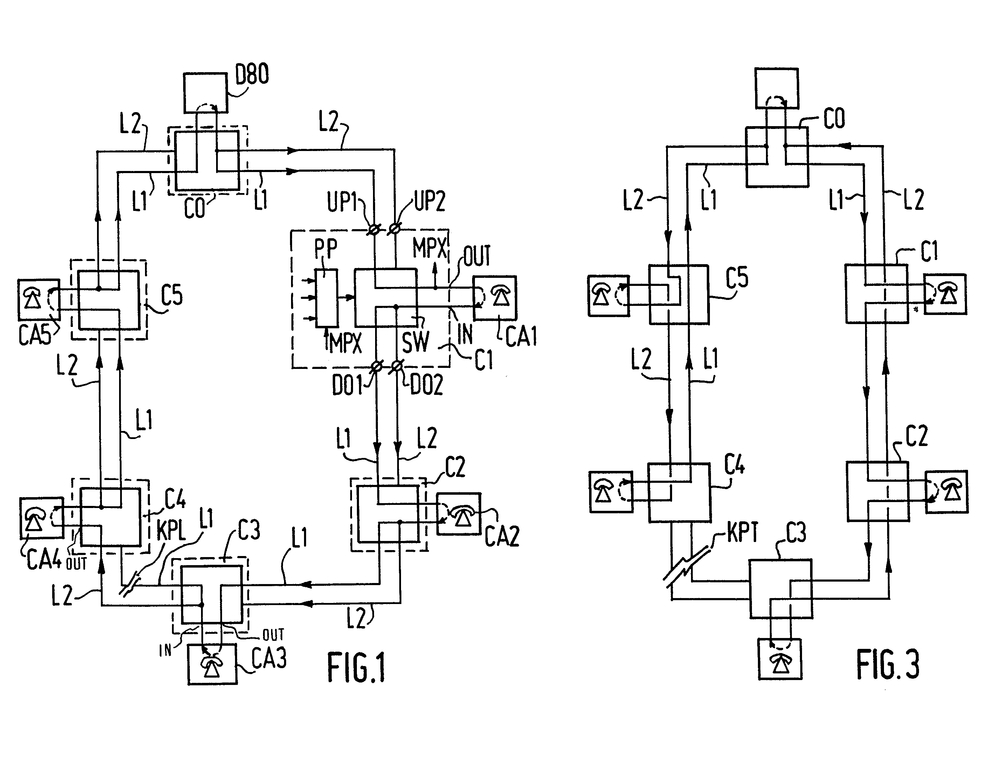

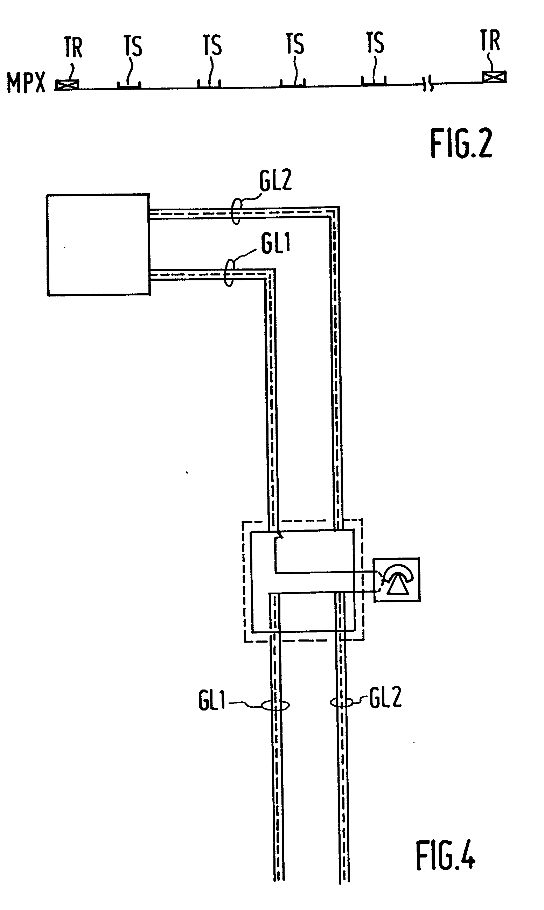

Le système de télécommunication montré à la figure 1 comporte deux lignes L1 et L2 pour réunir entre eux des circuits de raccordement C1, C2, C3, C4 et C5. Grâce à ces circuits de raccordement, de l'information peut être échangée entre des circuits d'abonnés dont un ou plusieurs sont rattachés à un circuit de raccordement. Pour la clarté des figures, on a seulement dessiné un seul circuit d'abonné par circuit de raccordement, le circuit d'abonné CA1 étant rattaché au circuit de raccordement C1, le circuit d'abonné CA2 au circuit C2, et ainsi de suite jusqu'au circuit d'abonné CA5 rattaché au circuit de raccordement C5. L'information est transmise, dans ce système, selon un multiplex numérique temporel MPX dont l'organisation est représentée d'une manière simplifiée à la figure 2. Dans ce multiplex, différents espaces de temps TS sont attribués à des octets destinés, en cas de défaillance, à transmettre des informations pour pallier ces défaillances. Un espace de temps TR contient un octet particulier pour repérer ces différents espaces de temps TS.

Les espaces de temps compris entre ces espaces de temps TR ou TS sont utilisés, lorsqu'aucune défaillance n'est décelée, pour transmettre des informations entre les différents abonnés. Pour obtenir une transmission en boucle du multiplex, un dispositif de bouclage DBO est nécessaire. Un tel dispositif est décrit dans le brevet français no 2 165 182 de la demanderesse. Les lignes L1 et L2 sont raccordées à ce dispositif DBO par un circuit de raccordement CO tout comme les circuits d'abonnés. Lorsque le système fonctionne normalement, c'est-à-dire lorsqu'aucune défaillance n'existe, on peut définir un sens de transmission. Le dispositif de bouclage DBO engendre les signaux d'organisation du multiplex qui sont notamment transmis par la ligne L1 vers le circuit de raccordement C1 puis, successivement, vers les circuits C2, C3, C4 et C5 et reviennent ensuite via le circuit CO au circuit de bouclage DBO. Les accès UP1 et UP2 des différents circuits de raccordement C1, C2... sont prévus pour connecter respectivement les lignes L1 et L2 venant du circuit de raccordement amont selon le sens de transmission qui vient d'être défini. Ces accès UP1 et UP2 sont appelés, en conséquence, accès amont. Les accès DO1 et DO2 des différents circuits de raccordement C1, C2, ... sont prévus pour connecter respectivement les lignes L1 et L2 venant du circuit de raccordement aval et sont donc appelés accès aval. Les circuits d'abonnés CA1, ... C5 sont connectés aux sorties OUT et aux entrées IN des circuits de raccordement C1, ... C5 auxquels ils sont rattachés. Les entrées et sorties IN et OUT peuvent être reliées aux différents accès UP1, UP2, DO1 et DO2 au moyen d'un ensemble de commutation SW commandé par un organe de commande PP.

Conformément à l'invention, l'organe de commande PP est prévu pour relier la sortie OUT du circuit de raccordement sur l'un des accès amont UP1 ou UP2 recevant de l'information, tandis que l'entrée IN est reliée aux accès aval DO1 et DO2.

En se reportant à la figure 1, on voit que les signaux du multiplex sont transmis, entre le circuit de raccordement CO et C1, à la fois sur les lignes L1 et L2. De préférence, l'organe de commande connectera la sortie OUT sur la ligne L1, tandis que l'entrée IN sera connectée sur les lignes L1 et L2.

L'intérêt de cette mesure prescrite par l'invention devient évident si une coupure survient sur la ligne L1. On a repéré par KPL une telle coupure de la ligne L1 entre les circuits de raccordement C3 et C4. L'organe de commande, non représenté pour ce circuit de commande, va œuvrer pour que sa sortie OUT soit connectée sur le fil L2. Ainsi, sans complication, une défaillance de ce type est surmonté.

Si une coupure plus grave survient, par exemple une coupure KPT des deux câbles en même temps, comme cela est représenté à la figure 3 entre les circuits de raccordement C3 et C4, un processus de reconfiguration du système sera déclenché, par exemple au niveau du dispositif de bouclage, comme cela sera décrit par la suite; un tel processus a été décrit dans le brevet no 2 256 605 déjà cité. Selon cette configuration, le sens de transmission dans la ligne L1 est inchangé alors que celui sur la ligne L2 est inversé.

Selon un mode de réalisation de l'invention, le nombre de lignes peut être multiplié. Ceci est important lorsqu'un tel système est utilisé dans un milieu agressif et que les ruptures de câbles sont à craindre. C'est le cas, notamment, où le système est placé dans un navire de guerre. Les différentes lignes sont alors groupées en deux ensembles GL1 et GL2 (voir figure 4) qui peuvent contenir une ou plusieurs lignes. Le groupe de lignes GL1 transmet l'information toujours dans le même sens, tandis que la ligne GL2 la transmet soit dans un sens soit dans l'autre selon que le processus de reconfiguration a été déclenché ou non.

Dans la suite du présent exposé, on va décrire plus en détail un système comportant des ensembles de lignes GL1 et GL2 formés respectivement chacun de lignes L11 et L12, d'une part, et L21 et L22, d'autre part. Il sera facile ensuite pour un homme de l'art de généraliser le système pour un nombre quelconque de lignes contenues dans les ensembles. Ce système comportera deux circuits de bouclage à partir desquels le processus de reconfiguration peut être lancé.

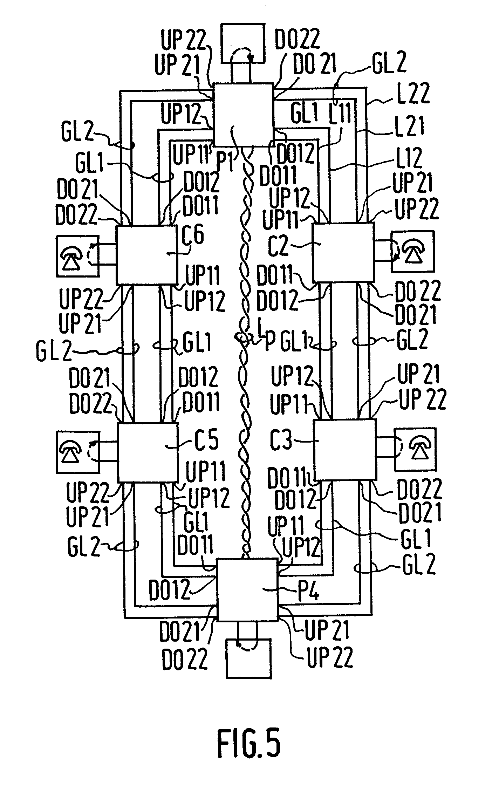

Ce système est montré globalement à la figure 5. Les circuits de raccordement rattachés aux dispositifs de bouclage portent les références P1 et P4 et seront dénommés par la suite circuits pilotes. Ces circuits sont reliés entre eux par une paire torsadée Lp. Entre ces circuits pilotes P1 et P4 sont disposés selon le sens aval les circuits de raccordement C2 et C3 et entre les circuits P4 et P1 les circuits C5 et C6. On a repéré aussi sur cette figure les différents accès des circuits de raccordement et ces circuits pilotes; ces accès portent les mêmes références pour ces différents circuits. Ainsi, les accès dirigés du côté aval portent les références: DO11, DO12, DO21 et DO22 et sont connectés respectivement aux lignes L11, L12, L21 et L22 et les accès dirigés du côté amont portent les références UP11, UP21 et UP22 et sont connectés respectivement aux lignes L11, L12, L21 et L22.

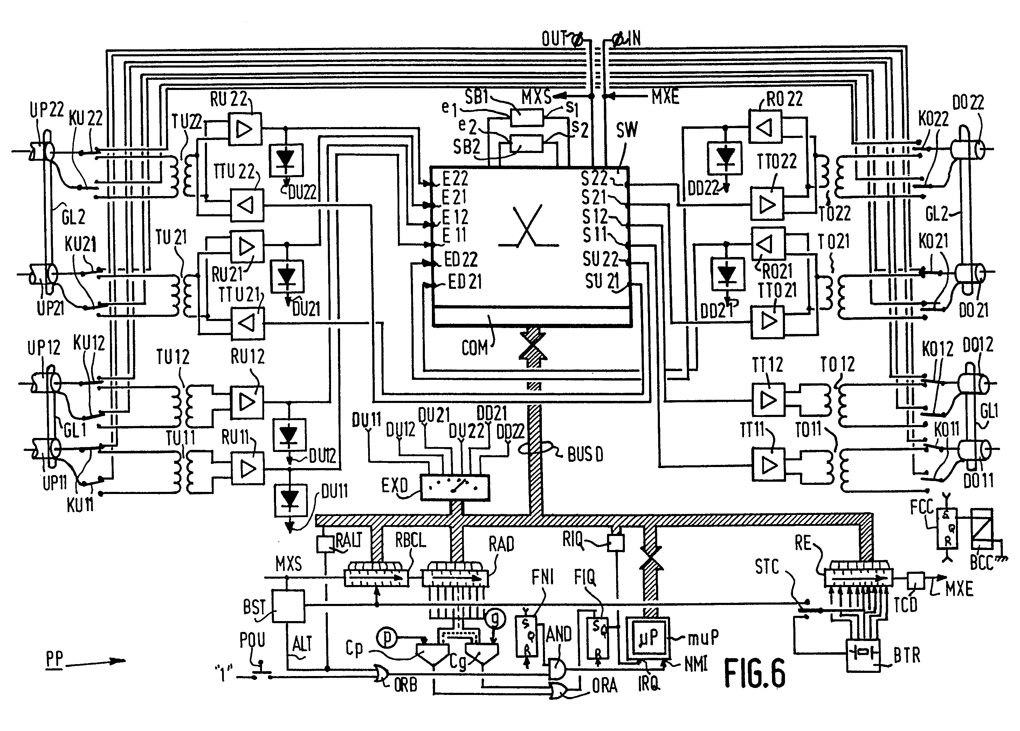

La figure 6 montre plus en détail un circuit de raccordement.

Selon une particularité importante de l'invention, les bornes UP11 et DO11 peuvent être connectées ensemble par l'intermédiaire des contacts KU11 et KO11 d'un relais de court-circuit dont la bobine d'excitation porte la référence BCC; les bornes UP12 et DO12 peuvent être aussi connectées par l'intermédiaire des contacts KU12 et KO12 du même relais. De même, les bornes UP21 et DO21 peuvent être connectées par l'intermédiaire des contacts KU21 et KO21 et les bornes UP22 et DO2 par les contacts KU22 et KO22. Ainsi, lorsque la bobine BCC de ce relais n'est pas excitée, le circuit de rattachement devient «transparent» pour toutes les informations véhiculées par les différentes lignes L11, L12, L21 et L22.

Lorsque les contacts KU11, KO11, KU12, KO12, KU21, KO21, KU22 et KO22 sont au travail, la ligne L11 est connectée en amont au primaire d'un transformateur d'isolement TU11 et en aval au secondaire d'un autre transformateur d'isolement TO11, la ligne L12 est connectée en amont au primaire d'un transformateur d'isolement TU12 et en aval au secondaire d'un transformateur TO12, la ligne L21 est connectée en amont au primaire d'un transformateur TU21 et en aval au secondaire d'un transformateur TO21 et la ligne L22 est connectée en amont au primaire d'un transformateur TU22 et en aval au secondaire d'un transformateur TO22. Le secondaire du transformateur TU11 est relié, par l'intermédiaire d'un amplificateur RU11, à l'entrée E11 de l'ensemble de commutation SW, le secondaire du transformateur TU12 est relié, par l'intermédiaire d'un amplificateur RU12 à l'entrée E12 de l'ensemble SW. Le primaire du transformateur TO11 est relié, par l'intermédiaire d'un amplificateur TT11, à la sortie S11 de l'ensemble SW et le primaire du transformateur TO12 est relié, par l'intermédiaire d'un amplificateur TT12, à la sortie S12 de l'ensemble de commutation SW. Le secondaire du transformateur TU21 est relié, d'une part, par l'intermédiaire d'un amplificateur RU21, à l'entrée E21 de l'ensemble SW et, d'autre part, par l'intermédiaire d'un amplificateur TTU21 à la sortie SU21 de l'ensemble SW. Le secondaire du transformateur TU22 est relié, d'une part, par l'intermédiaire d'un amplificateur RU11 à l'entrée E22 de l'ensemble SW et, d'autre part, par l'intermédiaire d'un amplificateur TTU22 à la sortie SU22 de SW. Le primaire du transformateur TO21 est relié, d'une part, par l'intermédiaire d'un amplificateur RO21 à l'entrée ED21 de SW et, d'autre part, par l'intermédiaire d'un amplificateur TTO21 à la sortie S21 de SW. Le primaire du transformateur TO22 est relié, d'une part, par l'intermédiaire d'un amplificateur RO22 à l'entrée ED22 de l'ensemble de commutation SW et, d'autre part, par l'intermédiaire d'un amplificateur TTO22 à la sortie S22 de l'ensemble SW. Les différents amplificateurs RU11, RU12, RU22, RO21 et RO22 amplifient les signaux reçus pour qu'à leur sortie le niveau de ces signaux puisse être traité par l'ensemble de commutation SW élaboré en circuit logique TTL, tandis que les amplificateurs TT11, TT12, TTO21, TTO22, TTU21 et TTU22 amplifient les signaux à la sortie de l'ensemble SW pour que la propagation sur les différentes lignes puisse s'effectuer de manière convenable.

Les données émises sur les lignes sont codées en biphase et pour pouvoir traiter les données transmises selon ce code, on a prévu deux dispositifs de conversion SB1 et SB2 munis respectivement d'entrées e1 et e2 et de sorties s1 et s2 connectées aussi à l'ensemble SW; à la borne OUT à laquelle est connecté le fil MXS, on obtient les données converties par l'un ou l'autre des dispositifs SB1 et SB2 et, à la borne IN à laquelle est connecté le fil MXE, on a le multiplex biphase, les bornes IN et OUT étant aussi reliées à l'ensemble SW.

Les différentes commutations à effectuer à l'intérieur de l'ensemble sont définies au moyen de mots contenus dans un registre COM attenant à l'ensemble SW; ces mots sont fournis par un ensemble à microprocesseur muP faisant partie de l'organe de commande PP. Ces mots sont transmis sur un bus de données BUSD. Les différents tableaux que l'on trouvera dans la suite du présent exposé expliciteront les différentes commutations, ce qui permettra à tout homme de l'art de constituer cet ensemble SW, par exemple au moyen de réseaux logiques FPLA.

Différents détecteurs fournissent sur des fils DU11, DU12, DU21, DU22, DD21 et DD22, des signaux indiquant la présence de signaux reçus sur respectivement les accès UP11, UP12, UP21, UP22, DO21 et DO22. Ces détecteurs sont branchés respectivement en sortie des amplificateurs RU11, RU12, RU21, RU22, RO21 et RO22. Ils sont constitués, par exemple, par ces circuits monostables à redéclenchement, de sorte que si les transitions de signaux appliqués à leurs entrées surviennent avec une cadence suffisamment rapide, ils restent à leur état de basculement, s'il n'y a pas de transition, ils passent à leur autre état. Ces fils DU11, DU12, DU21, DU22, DD21 et DD22 sont reliés, par l'intermédiaire d'un commutateur EXD, au bus BUSD. La position du commutateur EXD est définie par un code d'adresses élaboré par l'ensemble muP d'une manière qu'il n'est pas nécessaire de représenter en détail. L'ensemble muP a accès à deux registres à décalage RBCL et RAD montés en cascade, l'entrée du premier de ce registre RBCL est reliée au fil MXS; il est chargé systématiquement des éléments binaires contenus dans les espaces de temps TS (voir figure 2); pour cela, tout comme le registre RAD d'ailleurs, l'entrée de décalage est reliée à la sortie d'une base de temps BST. Pour que cette base de temps puisse déterminer les espaces de temps TS, elle doit discerner, comme cela est bien connu, les codes de trame contenus dans les espaces de temps TR; si elle n'arrive pas à détecter ces codes de trame, elle fournit un signal sur un fil ALT. L'ensemble muP a aussi accès à un registre à décalage RE dont la sortie est reliée à un convertisseur de code TCD pour fournir les données en code biphase sur le fil MXE. La commande de décalage de ce registre est aussi reliée à la base de temps BST. Le registre RE peut être aussi chargé de codes de trame pour les émettre dans les espaces de temps TR; ceci est élaboré par une base de temps auxiliaire BTR qui fournit aussi les signaux de décalage à ce registre RE; un commutateur STC met le registre RE sous la dépendance de cette base de temps BTR, lorsqu'il est dans une position, et sous la dépendance de la base de temps BST lorsqu'il est dans son autre position. Différentes bascules FCC, FIQ, FNI sont accessibles à l'ensemble muP; les bascules FCC et FNI peuvent être mises dans leur premier état au moyen de codes d'adresses et dans leur deuxième état au moyen d'autres codes d'adresses; la bascule FNI peut être mise dans son premier état par un signal fourni par une porte ORA et dans son deuxième état par un code d'adresses. La porte ORA effectue l'opération OU logique de deux signaux fournis par des comparateurs Cp et Cg; ces comparateurs effectuent une comparaison entre le contenu du registre RAD et respectivement des mots «p» et «g», le mot «g» étant un mot commun à tous les circuits de raccordement et le mot «p» un mot particulier à chaque circuit de raccordement. L'ensemble muP possède deux entrées d'interruptions IRQ et NMI, l'entrée IRQ est reliée à la sortie Q de la bascule FIQ et l'entrée NMI à la sortie d'une porte ET «AND» à deux entrées dont une première entrée est reliée à la sortie de la bascule FNI et dont la deuxième à la sortie d'une porte ORB à deux entrées; la première entrée de cette porte est reliée au fil ALT, quant à la deuxième, elle est reliée à un plot d'un bouton poussoir POU couplé à l'interrupteur de mise en route du circuit de raccordement. Une bascule RALT est prévue pour transmettre, sur un fil du BUSD, l'état du signal transmis sur le fil ALT. De même, une bascule RIQ est prévue pour transmettre sur le bus BUSD l'état de sortie de la bascule FIQ.

Le fonctionnement d'un tel circuit est défini par un programme enregistré dans une mémoire morte faisant partie de l'ensemble muP. Ce fonctionnement va être expliqué à l'aide d'ordinogrammes représentant bien le programme enregistré. Le programme en question est divisé en deux parties. Le déroulement de la première partie est déclenché par un signal appliqué à l'entrée NMI et le déroulement de la deuxième partie par un signal appliqué à l'entrée IRQ.

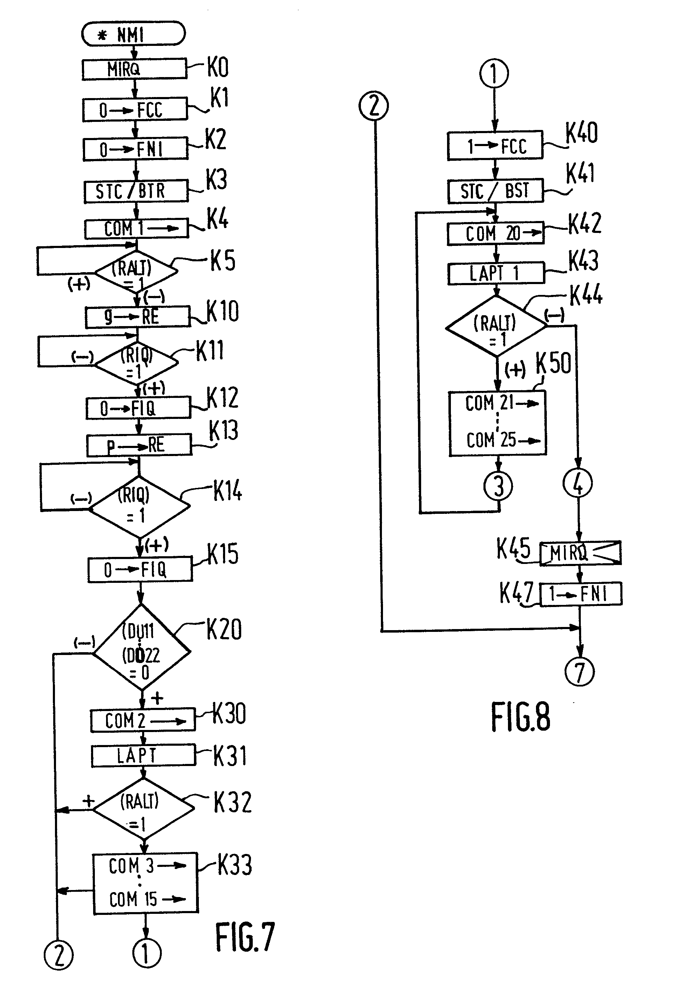

On explique tout d'abord la première partie (ordinogramme des figures 7 et 8). Le signal à l'entrée NMI n'apparaît que si un signal actif est transmis par le fil ALT ou si le bouton poussoir POU est actionné (cas de la mise en route). A la case KO, première opération, on masque les interruptions susceptibles d'être déclenchées par les signaux appliqués à l'entrée IRQ. Puis, la case K1 de l'ordinogramme représenté à la figure 7 indique la seconde opération commandée par l'ensemble muP; cette seconde opération consiste en la mise à zéro de la bascule FCC, ce qui supprime le courant d'excitation de la bobine BCC si elle était excitée. Pour mettre à zéro cette bascule, il suffit d'affecter un code d'adresses particulier à son entrée R et de faire surgir un signal actif sur cette entrée R au moyen d'un décodeur de codes connecté au bus d'adresses de l'ensemble muP; cela est bien connu dans la technique et il n'y a pas lieu de détailler ce genre de circuit afin de ne pas surcharger les figures. De la même manière, on met à zéro la bascule FNI (case K2), ainsi, les signaux actifs apparaissent ultérieurement sur le fil ALT ne ramènent pas cette partie du programme à son début puisque la porte AND est fermée.

On effectue alors l'opération indiquée à la case K3, c'est-à-dire qu'on met le registre RE sous la dépendance de la base de temps BTR; ainsi, les codes de trame sont émis convenablement dans les temps TR, puis on effectue l'opération indiquée à la case K4; un mot COM1 est envoyé dans le registre COM attenant à l'ensemble SW. Ce mot COM1 provoque une commutation indiquée au tableau I (ci-dessous); cette commutation permet de vérifier notamment le bon fonctionnement de SB1 et SB2 qui sont connectés bout à bout; on attend ensuite que la base de temps BST se synchronise sur les codes fournis par la base de temps BTR; pour cela, on teste (case K5) le contenu du registre (RALT). Tant que celui-ci est égal à «1», cela signifie que la synchronisation n'est pas obtenue; dès qu'elle est obtenue, on passe à un test suivant qui consiste à vérifier le bon fonctionnement de la reconnaissance des adresses «g» et «p». Pour cela, à la case K10, on met le mot «g» dans le registre RE et on attend que le signal de sortie de la bascule RIQ passe à «1» (case K11), ceci traduit que le code «g» a bien été détecté; puis à la case K12, la bascule FIQ est mise à zéro; l'opération à la case K13 consiste à mettre dans le registre RE le code «p» et à la case K14, on attend que le signal à la sortie de la bascule RIQ passe à 1 traduisant la bonne reconnaissance du code «p», puis à la case K15, on remet à zéro la bascule FIQ.

Tableau I

| Mot de commutation | Commutations effectuées à l'intérieur du réseau SW |
|---|---|
| COM1 | IN–e2; s2–e1; s1–OUT |
| COM2 | IN–S21; IN–S22; e2–ED21; s2–OUT |
| COM3 | IN–S21; IN–S22; e2–ED22; s2–OUT |
| COM4 | IN–S21; IN–S22; e1–ED21; s1–OUT |
| COM5 | IN–S21; IN–S22; e1–ED22; s1–OUT |
| COM6 | IN–SU21; IN–SU22; e2–E21; s2–OUT |
| COM7 | IN–SU21; IN–SU22; e2–E22; s2–OUT |
| COM8 | IN–SU21; IN–SU22; e1–E21; s1–OUT |
| COM9 | IN–SU21; IN–SU22; e1–E22; s1–OUT |
| COM10 | IN–S11; IN–S22; e1–E11; s1–OUT |
| COM11 | IN–S11; IN–S12; e1–E12; s1–OUT |
| COM12 | IN–S11; IN–S12; e2–E11; s2–OUT |
| COM13 | IN–S11; IN–S12; e2–E12; s2–OUT |
| COM14 | IN–e1; s1–OUT |

Tableau I (suite)

| Mot de commutation | Commutations effectuées à l'intérieur du réseau SW |
|---|---|
| COM15 | IN–e2; s2–OUT |

Un autre test indiqué à la case K20 consiste à vérifier que les signaux sur les fils DU11, DU12, DU21, DU22, DD21 et DD22 soient bien égaux à zéro, ce qui veut dire qu'aucun signal n'a à être présent aux entrées des détecteurs. Si c'est le cas, on va à la fin de cette première partie de programme, c'est-à-dire qu'aucune autre opération n'est entreprise.

Puis, à partir de la case K30, on va tester si la synchronisation de la base de temps BST peut être obtenue pour différentes commutations effectuées dans l'ensemble SW; à cette case K30, on envoie le mot COM2 dans le registre COM; on laisse passer un temps suffisant LAPT (case K31) où l'on juge que la synchronisation doit être obtenue; on teste alors à la case K32 si elle est effectivement obtenue, si ce n'est pas le cas, on va à la fin de cette première partie de programme. Si c'est le cas, on fait alors les mêmes essais pour les mots COM3 à COM15. Si tous ces derniers tests se sont révélés concluants, les bornes d'accès du circuit de rattachement ne sont plus mises en court-circuit; pour cela, l'opération indiquée à la case K40 (figure 8) met la bascule FCC à l'état 1, de sorte que la bobine BCC est excitée, puis, case K41, le registre RE est mis sous la dépendance de la base de temps BST; le mot COM20 est envoyé (case K42) dans le registre COM, provoquant les commutations indiquées dans le tableau II ci-dessous. On laisse écouler un certain laps de temps LAPT1 (case K43) avant de tester la bascule RALT pour savoir si une synchronisation de la base de temps BST a été obtenue (case K44). Si elle est obtenue, on passe à la case K45 qui indique l'opération de lever de masque sur les interruptions IRQ et on met la bascule FNI à l'état 1 pour laisser passer des signaux éventuels vers l'entrée NMI (case K47). Si l'on n'a pas obtenu cette synchronisation, différents mots, COM21 à COM25, vont être essayés (case K50). Si après le mot COM25, la synchronisation n'est toujours pas obtenue, en réessaye le mot COM20. La sortie de l'ordinogramme de la figure 8 s'effectue au point 7.

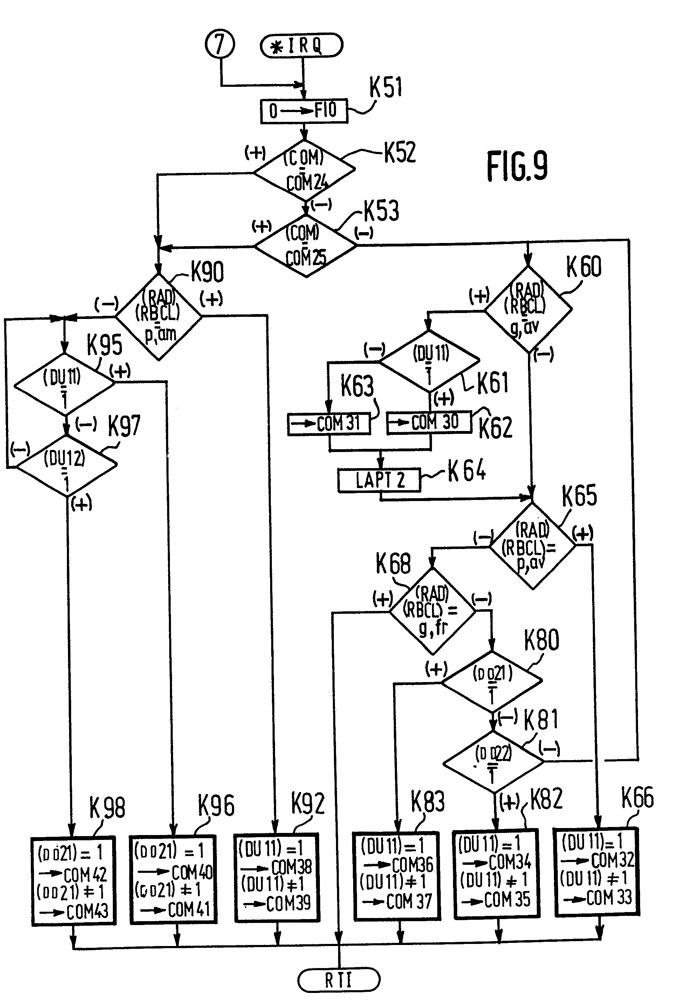

La deuxième partie du programme montré à la figure 9 peut être la suite du programme dont l'ordinogramme est montré à la figure 8; elle peut être encore déclenchée, ainsi qu'on l'a déjà dit, par un signal apparaissant à l'entrée IRQ. Ceci est provoqué par l'apparition d'un code d'adresses général «g» ou particulier «p» contenu dans le registre RAD. Avant d'examiner ce contenu, on effectue des opérations préliminaires. Tout d'abord, la bascule FIQ est mise à zéro (case K51); aux cases K52 et K53, on vient examiner si le mot contenu dans le registre COM est le mot COM24 ou le mot COM25. Le programme se divi-

**0 115 894**

se alors en deux branches selon que l'on a affaire ou non avec ces deux mots.

Tableau II

| Mot de commutation | Commutations effectuées à l'intérieur du réseau SW |
|---|---|
| COM20 | IN–S11; IN–S12; IN–S21; IN–S22; E11–e1; s1–OUT |
| COM21 | IN–S11; IN–S12; IN–S21; IN–S22; E12–e1; s1–OUT |
| COM22 | IN–S11; IN–S12; IN–S21; IN–S22; E21–e1; s1–OUT |
| COM23 | IN–S11; IN–S12; IN–S21; IN–S22; E22–e1; s1–OUT |
| COM24 | IN–SU21; IN–SU22; ED21–e1; s1–OUT |
| COM25 | IN–SU21; IN–SU22; ED22–e1; s1–OUT |

Une de ces branches commence à la case K60 et concerne le cas où le mot contenu dans le registre COM n'est ni le mot COM24, ni le mot COM25. A cette case, on examine les contenus des registres RAD et RBCL; on compare ces contenus avec respectivement le mot «g» déjà défini et un certain mot d'ordre «av»; si c'est le cas, on effectue le test indiqué à la case K61 qui consiste à vérifier la présence de signal à l'accès UP11, ce qui se traduit par un signal actif sur le fil DU11. La présence de signal à cet accès provoque l'émission (case K62) du mot COM30 dans le registre COM (voir tableau III ci-dessous). S'il n'y a pas de signal à cet accès, on admet implicitement que les signaux sont présents à l'accès UP12 et on envoie le mot COM31 dans le registre COM (case K63). Après les opérations indiquées aux cases K62 et K63, on attend un certain temps LAPT2 (case K64) pendant lequel les contenus des registres RAD et RBCL sont susceptibles de changer. Si les contenus de ces registres s'identifient au mot «p» et au mot «av» (case K65), on passe alors à la case K66 où, selon qu'il y ait présence de signal sur le fil DU11 ou non, on envoie le mot COM32 ou COM33. Si les contenus des registres RAD et RBCL ne s'identifient pas à «p», «av», on examine alors s'ils ne s'identifient pas à «g», «fr» (case K68); s'il y a identification, on passe à la fin du programme d'interruption; s'il n'y a pas identification, on passe à la case K80 où l'on teste la présence de signal sur le fil DO21; s'il n'y a pas de signal, on teste alors (case K81), la présence de signal sur le fil DO22; s'il n'y a pas de signal sur ce dernier fil, on retourne à la case K60. La présence de signal sur le fil DD22 entraîne l'émission du mot COM34 si un signal est présent sur le fil DU11 ou du mot COM35 si ce signal n'est pas présent (case K82). La présence de signal sur le fil DD21 (case K80) provoque les opérations indiquées à la case K83: on envoie dans le registre COM le mot COM36 si un signal actif est présent sur le fil DU11 ou le mot COM37 s'il n'y a pas de signal.

L'autre branche de programme commence à la case K90 et concerne le cas où aux cases K52 et K53, le contenu du registre COM est le mot COM24 ou le mot COM25.

Tableau III

| Mot de commutation | Commutations effectuées à l'intérieur du réseau SW |
|---|---|
| COM30 | IN–S11; IN–S12; E11–e1; s1–OUT; s2–SU22; s2–SU21 |
| COM31 | IN–S11; IN–S12; E12–e1; s1–OUT; s2–SU22; s2–SU21 |
| COM32 | IN–SU21; IN–SU22; E11–e1; s1–OUT |
| COM33 | IN–SU21; IN–SU22; E12–e1; s1–OUT |
| COM34 | IN–S11; IN–SU12; E11–e1; ED22–e2; s2–SU21; s2–SU22; s1–OUT |
| COM35 | IN–S11; IN–S12; E12–e1; ED22–e2; s2–SU21; s2–SU22; s1–OUT |
| COM36 | IN–S11; IN–S12; E11–e1; ED21–e2; s2–SU21; s2–SU22; s1–OUT |
| COM37 | IN–S11; IN–S12; E12–e1; ED21–e2; s2–SU21; s2–SU22; s1–OUT |
| COM38 | IN–S11; IN–S12; ED21–e1; s1–OUT |
| COM39 | IN–S11; IN–S12; ED22–e1; s1–OUT |
| COM40 | IN–SU21; IN–SU22; ED21–e1; E11–e2; s2–S11; s2–S12; s1–OUT |
| COM41 | IN–SU21; IN–SU22; ED22–e1; E11–e2; s2–S11; s2–S12; s1–OUT |
| COM42 | IN–SU21; IN–SU22; ED21–e1; E12–e2; s2–S11; s2–S12; s1–OUT |
| COM43 | IN–SU21; IN–SU22; ED22–e1; E12–e2; s2–S11; s2–S12; s1–OUT |

A cette case K90, on examine si les contenus des registres RAD et RBCL s'identifient aux mots «p» et «am»; s'il y a identification, on va à la case K82, où les opérations indiquées consistent à envoyer dans le registre COM le mot COM38 si un signal actif est présent sur le fil DU11 ou le mot COM39 s'il n'y a pas de signal actif. Si les contenus des registres RAD et RBCL ne s'identifient pas à «p», «am», on teste, à la case K95, la présence de signal sur le fil DU11; si du signal est présent sur ce fil, on effectue les opérations indiquées à la case K96, c'est-à-dire on commande l'envoi du mot COM40, s'il y a un signal actif sur le fil DD21 ou du mot COM41, s'il n'y a pas de signal actif. Le fait qu'il n'y ait pas de signal sur le fil DU11 provoque un test supplémentaire de la présence de signal actif sur le fil DU12; l'absence de signal provoque le retour à la case K95, la présence entraîne les opérations indiquées à la case K98, c'est-à-dire l'envoi du mot COM42 ou du mot COM43, selon la présence ou non de signal sur le fil DD21.

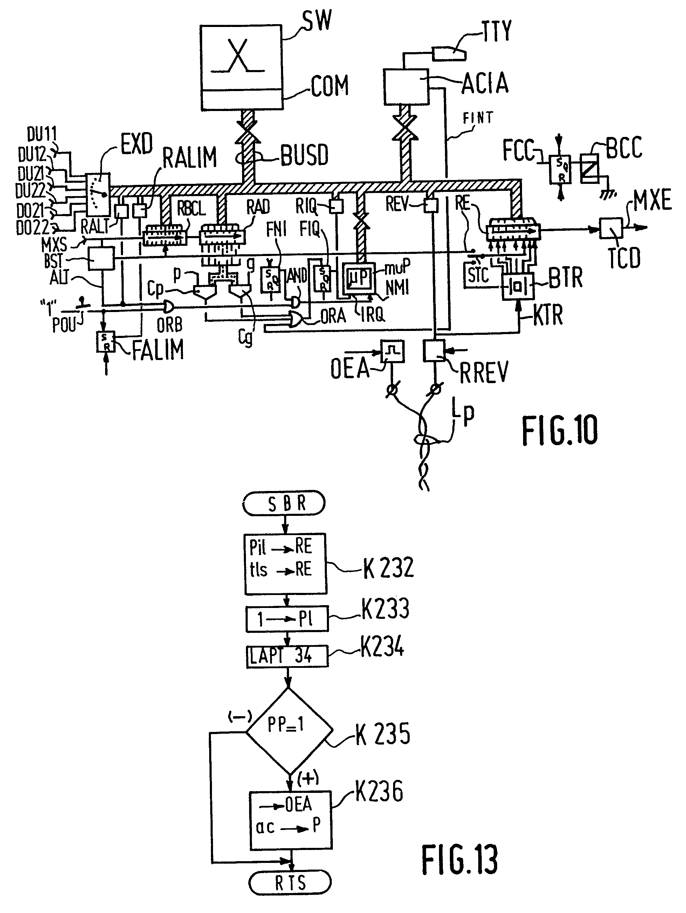

La figure 10 montre les modifications apportées à un circuit de raccordement pour le transformer en circuit pilote. Une différence importante est que ce circuit est équipé d'un émetteur d'ordre de mise en veille portant la référence OEA; cet émetteur est destiné à envoyer, via la ligne Lp, un ordre de mise en veille pour le deuxième circuit pilote. Ce deuxième circuit pilote peut, lui aussi, envoyer un ordre de mise en veille au premier circuit pilote; à cet effet, celui-ci est muni d'un récepteur d'ordre de mise en veille PREV. L'émetteur OEA est déclenché par un certain mode d'adresses engendré par l'ensemble muP; quant au récepteur RREV, il se comporte comme une bascule dont l'état peut être consulté par l'intermédiaire d'un registre REV lorsque l'ensemble muP engendre le code d'adresses qui est attribué à ce registre REV et qu'il est en position lecture; la bascule RREV peut être remise à zéro lorsque l'ensemble muP engendre un autre code d'adresses. Le signal de sortie de cette bascule est appliqué par l'intermédiaire d'un fil KTR à la base de temps BTR; dès qu'un signal actif apparaît sur ce fil KTR, ceci a pour effet de bloquer la formation et l'émission des codes de trames de synchronisation TR. le circuit pilote comporte une bascule FALIM qui est mise à l'état actif lorsque l'alimentation générale est branchée; pour cela, son entrée de mise à l'état actif est connectée au bouton-poussoir POU. L'état de cette bascule peut être consulté par l'ensemble muP via un registre RALIM. De la manière déjà indiquée, la bascule FALIM peut être remise à zéro. Il est prévu également un téléimprimeur TTY relié à l'ensemble muP par l'intermédiaire d'un circuit d'interface ACIA (par exemple, le 6805 fabriqué par Motorola). Dès qu'un message complet est tapé sur le téléimprimeur, un signal élaboré par le circuit ACIA est transmis sur le fil FINT vers une troisième entrée dont est munie la porte ORA.

Les circuits pilotes dont il va être question peuvent prendre deux états:

– un état actif, le circuit pilote, dans cet état, établit le multiplex;
– un état de veille et le circuit pilote, dans cet état, se comporterait comme un circuit de raccordement si ce n'est que d'autres tâches qui seront définies ci-dessous lui sont attribuées.

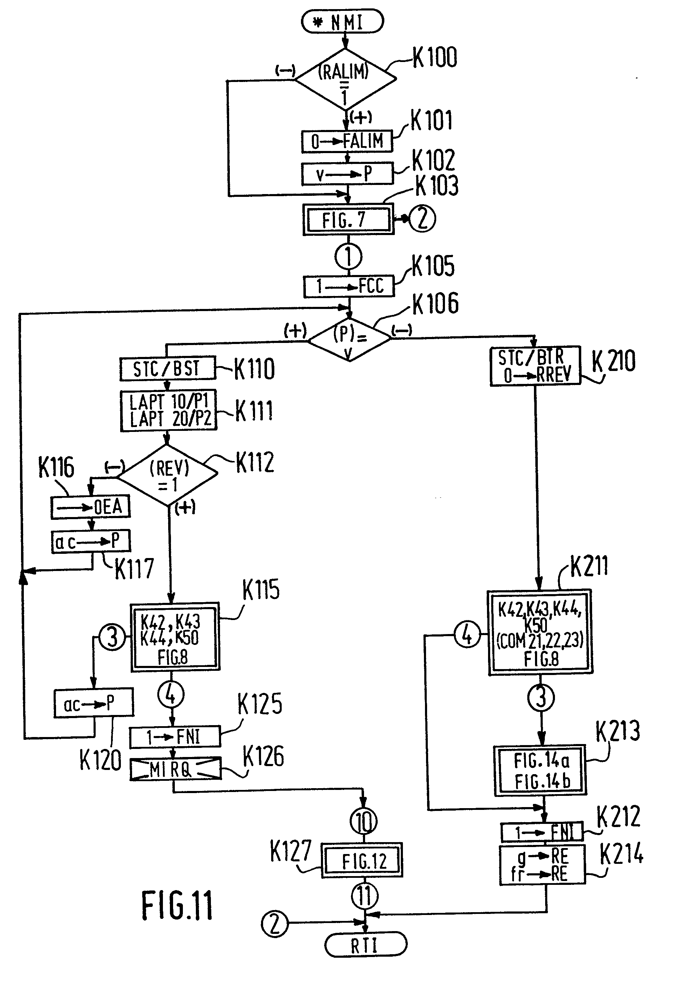

La figure 11 montre, sous forme d'ordinogramme, le fonctionnement des circuits pilotes. Le déroulement du programme dont l'ordinogramme est montré à cette figure 11 se déclenche dès qu'un signal actif apparaît sur l'entrée NMI de l'ensemble muP. Le test indiqué par la case K100 est la première opération du programme représenté par cet ordinogramme; elle consiste à tester le contenu du registre RALIM: si le signal est «1», cela signifie que le circuit pilote vient d'être mis en route, on remet alors la bascule FALIM à zéro (case K101). On met un mot «v» dans une mémoire P (case K102) et l'on passe à la case K103. Si le test indiqué à la case K100 est négatif, on passe aussi directement à la case K103. La case K103 représente tout l'ordinogramme de la figure 7 à partir de la case KO. Il convient alors de se reporter aux commentaires déjà faits. A la case K105 qui suit, on met à «1» la bascule FCC, ce qui supprime les courts-circuits effectués par les contacts KU11, ... KU22, KO11, ... KO22. Puis, à la case K106, on teste le contenu de la mémoire P. A partir de cette date, le programme se scinde en deux branches selon que le contenu de cette mémoire contient ou non le mot «v».

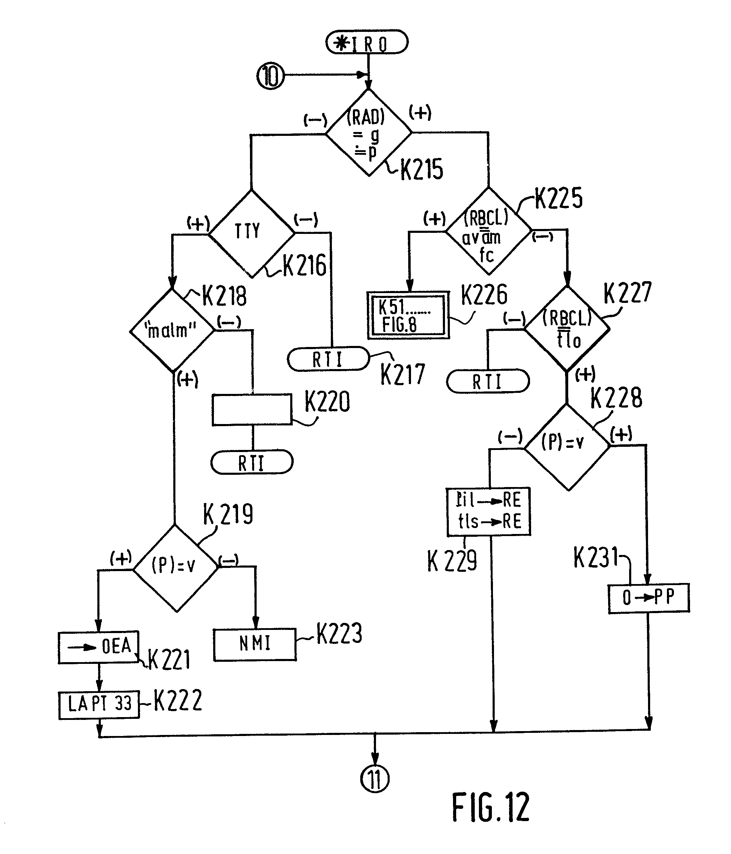

On exécute la première branche si le contenu de la mémoire P est le mot «v». Ce mot «v» conditionne l'état de veille du circuit pilote, ce dernier se comporte pratiquement comme un circuit de raccordement. Le commutateur STC (case K110) est mis dans une position telle que le multiplex sur le filx MXE est régi par la base de temps de réception BST. Puis, à la case K111, on laisse écouler un laps de temps LAPT10 pour un des circuits pilotes et un laps de temps LAPT20 pour l'autre circuit pilote. Ces laps de temps sont différents et sont définis de façon à donner une priorité à l'un des circuits pilotes lors de la mise en route du système. Après l'écoulement du laps de temps défini à la case K112, on teste le contenu du registre récepteur d'ordre REV; si on a reçu de l'autre circuit pilote l'ordre de mise en veille, le contenu de REV est «1» et l'on passe à la case K115; si l'on n'a pas reçu cet ordre, on va à la case K116 qui indique l'envoi, en direction du circuit pilote lointain, de l'ordre de mise en veille; puis, à la case K117, on met le mot «ac» dans la mémoire P, ce qui va, à la case K106, amener le programme dans sa deuxième branche qui sera décrite ci-après. A la case K115, on envoie différents mots dans le registre COM pour essayer d'obtenir une synchronisation de la base de temps de réception BST. Pour cela, on effectue les opérations déjà indiquées aux cases K42, K43, K44 et K50 de la figure 8. Si la synchronisation n'est pas possible, on sort au point 3 de la case K115 pour aller à la case K120 où l'on indique l'opération qui consiste à mettre le mot «ac» dans la mémoire P. De la case K120, on passe à la case K106 pour s'aiguiller sur la deuxième branche de programme. Si la synchronisation a été obtenue, on sort au point 4 de la case K115; on met à «1» la bascule FNI (case K125) et on lève le masque (case K126) qui avait été baissé à la case KO (voir K103). On passe ensuite à la case K127 dont les opérations sont explicitées à la figure 12.

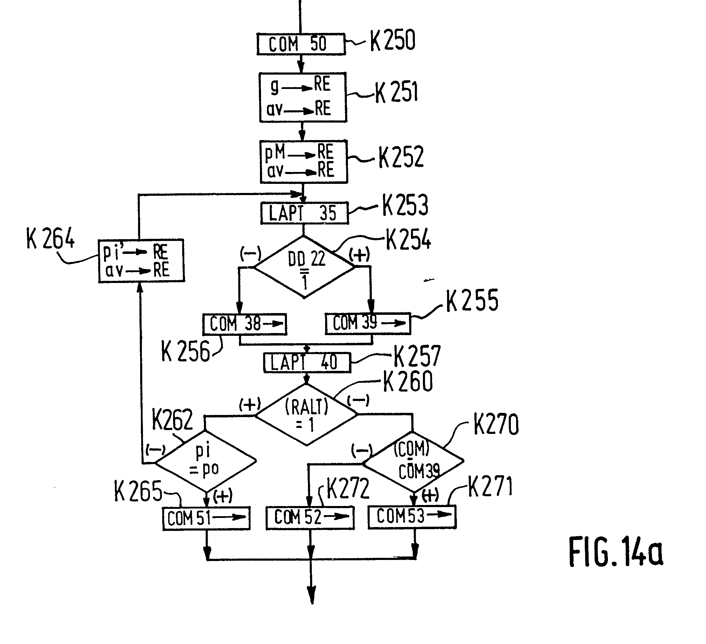

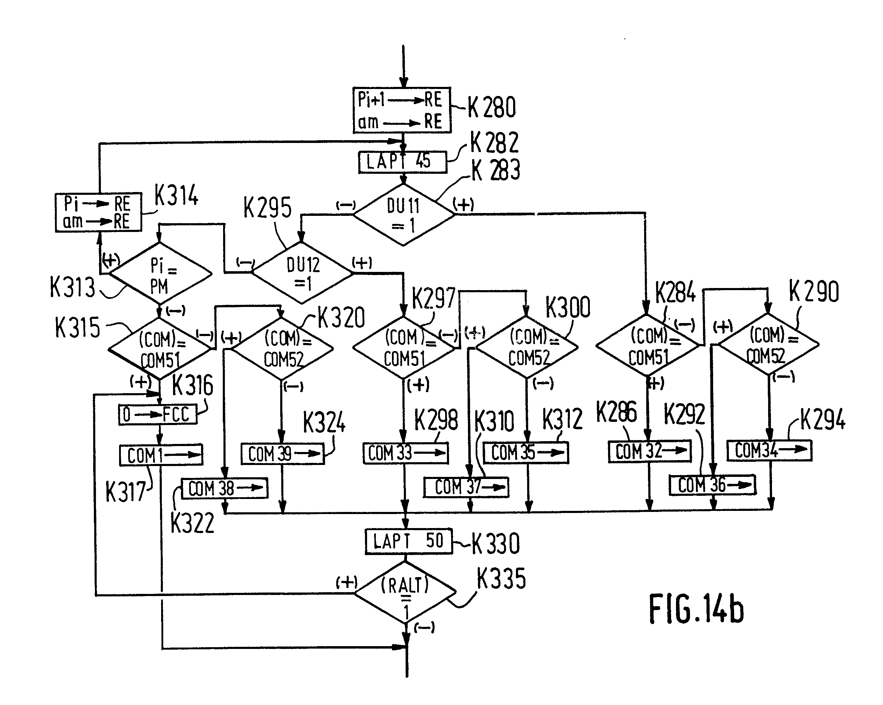

La deuxième branche de programme commence à la case K210. Là, par la manœuvre du commutateur STC, le multiplex sortant est mis sous la dépendance de la base de temps d'émission BTR et la bascule RREV est mise à zéro. Puis, on cherche à obtenir la synchronisation de la base de temps de réception BST par les opérations indiquées à la case K211. Ces opérations sont celles indiquées aux cases K42, K43, K44 et K50 de la figure 8; cependant, il convient de noter qu'à la case K50, pour obtenir la synchronisation, on n'essaie que les mots COM21, COM22, COM23. Si la synchronisation est obtenue, il n'y a pas lieu d'entreprendre d'actions supplémentaires et l'on va du point 4 de la case K211 à la case K212. Si la synchronisation n'est pas obtenue, cela signifie qu'il y a une défaillance grave du système et l'on doit entreprendre le processus de reconfiguration (case K213) qui est défini en détail aux figures 14a et 14b. A la case K212, on met la bascule FNI à «1» et à la case K214, on envoie les mots «g», «fr» qui, reconnus au niveau des circuits de raccordement, permettent l'exploitation normale du système de télécommunication.

Les opérations indiquées par l'ordinogramme représenté à la figure 12 peuvent démarrer de deux façons différentes: la première est la suite des opérations suivant l'opération indiquée à la case K126; la deuxième est l'apparition d'un signal d'interruption appliqué à l'entrée IRQ de l'ensemble muP. On sait que ce signal peut apparaître lorsqu'un code «p» ou «g» est contenu dans le registre RAD, ceci est testé à la case K215. Si le test est négatif, on teste alors (case K216) si l'interruption n'est pas provoquée par le téléimprimeur TTY, via le circuit d'interface ACIA. Si ce test est négatif, on estime que l'interruption est apparue d'une manière intempestive et l'on termine le programme d'interruption case K217. Si le test indiqué à la case K216 est positif, on examine alors le mot fourni par le téléimprimeur (case K218); si ce mot correspond à un code «malm», le seul qui est considéré dans le cadre de l'invention, on passe à la case K219; si ce mot est différent du code cité en dernier lieu, on passe à la case K220 qui concerne d'autres opérations (par exemple l'établissement de la liste des abonnés du système...). A la case K219 suivant la case K218 dans le cas où le test est positif, on teste le contenu de la mémoire P; si ce contenu s'identifie au code «v», on passe à la case K221 où l'opération indiquée consiste en l'envoi d'un ordre de mise en veille pour l'autre circuit pilote. Puis on attend un certain temps LAPT33 (case K222) pendant lequel devrait survenir l'apparition d'un signal actif sur le fil ALT signifiant par là que l'autre circuit pilote s'est bien mis en veille. Si rien ne se passe durant ce temps, aucune autre opération n'est envisagée. Si le test indiqué à la case K219 est négatif, on va à la case K223. Là, on effectue un branchement vers le programme déclenché par un signal sur l'entrée NMI de l'ensemble muP, autrement dit, on retourne à la case K100.

Lorsque le contenu du registre RAD s'identifie à l'un des deux codes «g» et «p» (case K215), on teste ensuite le contenu du registre RBCL (case K225); si ce contenu s'identifie à l'un des codes «av», «am» ou «fr», on passe à la case K226 qui représente tout l'ordinogramme montré à la figure 8, le circuit pilote se comportant alors comme un circuit de raccordement. Si le test de la case K225 se révèle négatif, on passe à la case K227. Là, on examine encore le contenu du registre RBCL pour savoir si celui-ci s'identifie au code «tls». Ce code est émis par les circuits pilotes lors d'une procédure de télésurveillance qui sera explicitée ci-dessous. Si le test indiqué dans cette case K227 est positif, on passe à la case K228; s'il est négatif, aucune opération supplémentaire n'est entreprise. A la case K228, on teste le contenu de la mémoire P. Si le code contenu dans cette mémoire est le code «v», on passe à la case K229 pour envoyer un code «tls» accompagnés de l'adresse «Pil» de l'autre circuit pilote. Si le test de la case K228 est positif, on passe à la case K231 où l'on met un «O» dans une mémoire PP.

La procédure de télésurveillance ci-dessus mentionnée consiste en une surveillance du circuit pilote actif, celui qui engendre tout le multiplex, par le circuit pilote en veille. Cette surveillance est gouvernée par un sous-programme apparaissant périodiquement. L'ordinogramme de ce sous-programme est montré à la figure 13. A la case K232, on émet le code «tls» accompagné du code d'adresse «Pil» du circuit pilote actif. Puis, à la case K233, on met «1» dans la mémoire PP. Puis, on laisse passer un laps de temps LAPT34 (case K234) durant lequel le signal d'interruption peut survenir et mettre à zéro la mémoire PP (voir case K231). Ceci est testé à la case K235; si le contenu de la mémoire PP est «O», il n'y a aucune opération à effectuer; si ce contenu est égal à «1», alors on envoie sur la paire torsadée Lp l'ordre de mise en veille à l'autre circuit pilote (case K231) et l'on met «ac» dans la mémoire P (case K236).

L'ordinogramme, dont une première partie est montrée à la figure 14a représentant le processus de reconfiguration, débute à la case K250 où l'opération indiquée consiste à envoyer, dans le registre COM, le mot COM50, ce qui provoque des commutations à l'intérieur du réseau SW, explicitées dans le tableau IV ci-dessous.

Tableau IV

| Mot de commutation | Commutations effectuées à l'intérieur du réseau SW |
|---|---|
| COM50 | IN–S11; IN–S12; IN–e1; s1–OUT |
| COM51 | IN–SU21; IN–SU22; IN–e1; s1–OUT |
| COM52 | IN–S22; IN–S11; s2–SU21; IN–e1; s1–OUT; e2–ED21; s2–SU22 |

Tableau IV (suite)

| Mot de commutation | Commutations effectuées à l'intérieur du réseau SW |
|---|---|
| COM53 | IN–S22; IN–S11; s2–SU21; s2–SU22; IN–e1; s1–OUT; e2–ED22 |

On envoie alors les mots «g», «av» (case K251), puis le mot «pM» accompagné du mot «av». Le mot «pM» correspond à l'adresse particulière du circuit de raccordement situé le plus loin en aval selon le sens de transmission défini au début du présent exposé; on laisse écouler un laps de temps LAPT35 (case K253) et on examine (case K254) si un signal actif apparaît sur le fil DD22; si c'est oui, on envoie (case K255) le mot COM39; si c'est non, on admet que c'est le fil DD21 qui est actif et, sans effectuer de test supplémentaire, on envoie (case K256) le mot COM38. Le mot COM38 ou le mot COM39 envoyé, on laisse s'écouler un laps de temps LAPT40 (case K257) avant d'effectuer le test sur la synchronisation indiquée à la case K260. Si la synchronisation n'est pas obtenue (RALT) = 1, on examine (case K262) l'adresse du circuit de raccordement pour savoir si c'est celle du circuit le plus proche selon le sens précité. Si ce n'est pas le cas, on met dans le registre RE (case K264) l'adresse particulière du circuit de raccordement plus proche que celui dont l'adresse a été émise précédemment. Cette adresse est émise accompagnée du mot «av». On revient ensuite à la case K253. Si le test indiqué à la case K262 se révèle positif, on envoie, alors, le mot COM51 au registre COM (case K265). Lorsque la synchronisation a été obtenue (case K260), on vient tester le contenu du registre COM (case K270). Si ce contenu correspond au mot COM39, on le remplace par le mot COM53 (case K271); s'il ne correspond pas à ce mot, c'est forcément le mot COM38; ce dernier mot est remplacé par le mot COM52 (case K272).

La case K280 marque le début d'une autre phase de ce processus de reconfiguration dont l'ordinogramme est montré à la figure 14b. Cette case vient à la suite des cases K265, K272 et K271. On émet, comme indiqué à cette case K280, l'adresse du circuit de raccordement situé le plus loin selon le sens contraire du sens précité, c'est-à-dire le plus loin en aval; on laisse passer un laps de temps LAPT45 (case K282) avant d'examiner l'accès où va arriver le signal de retour. On examine, tout d'abord, si le signal sur le fil DU11 est actif; s'il est actif, on passe au test indiqué à la case K284 qui consiste à tester le contenu du registre COM; si celui-ci correspond au mot COM51, on envoie le mot COM32 dans le registre COM (case K286). Si celui-ci ne correspond pas au mot COM51, il correspond peut-être au mot COM52; ceci est testé comme indiqué à la case K290. La correspondance avec le mot COM52 provoque l'émission du mot COM36 (case K292);

la non-correspondance, l'émission du mot COM34 (case K294). S'il n'y a pas de signal actif sur le fil DU11 (case K283), on examine alors s'il y a du signal actif sur le DU12 (case K295). La présence de signal entraîne un test de comparaison (case K297) entre le contenu du registre COM et le mot COM51. Si le contenu correspond à ce mot, il est remplacé par le mot COM33 (case K298); s'il ne correspond pas, on teste ensuite ce contenu avec le mot COM52 (case K300). Si le contenu du registre COM correspond au mot COM52, on envoie dans le registre COM le mot COM37 (case K310), s'il ne correspond pas, on envoie le mot COM35 (case K312). L'absence de signal actif à la fois sur le fil DU11 et sur le fil DU12 provoque encore un test du contenu du registre COM avec le mot COM51 (case K315). Si ce contenu correspond au mot COM51, on déclenche la bascule FCC pour que les accès du circuit pilote soient mis en court-circuit (case K316) et envoie le mot COM1 dans le registre. Le processus de reconfiguration est terminé dans ce cas, le circuit pilote étant pratiquement éliminé et l'on va à la case K215 et suivantes qui, du fait du court-circuit, indiquent des opérations sans effet. Si le test indiqué à la case K315 est négatif, on teste alors le contenu du registre COM pour savoir s'il correspond au mot COM52 (case K320); s'il y a correspondance, le mot COM52 est remplacé par le mot COM38 (case K322); s'il n'y a pas correspondance, par le mot COM39 (case K324). Après les opérations indiquées aux cases K286, K292, K294, K298, K310, K312, K322 et K324, on laisse écouler un laps de temps LAPT50 (case K330) avant de tester si la base de temps BST est synchronisée ou non (case K335). S'il y a synchronisation, on passe à la case K212 (figure 11); s'il n'y a pas synchronisation, on va à la case K316.

Pour bien expliquer le fonctionnement du système de télécommunication conforme à l'invention, on va montrer comment réagit le système en cas de défaillance grave.

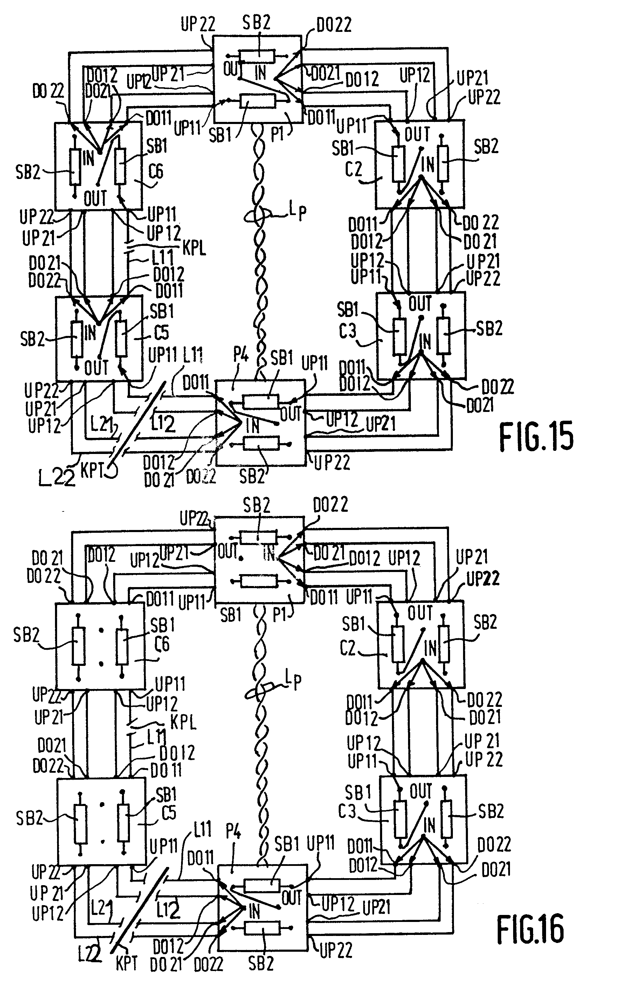

A la figure 15, le système est en fonctionnement normal lorsque survient une coupure KPT de toutes les lignes L11, L12, L21 et L22 entre les circuits P4 et C5 et une coupure KPL de la ligne L11 entre les circuits C5 et C6. En fonctionnement normal, le réseau de commutation effectue pour tous les circuits de raccordement, ainsi que pour les circuits pilotes, les relations électriques formées par le mot COM20. C'est-à-dire, en fait, les accès DO11, DO12, DO21 et DO22 sont reliés à la borne IN et la borne OUT est reliée à l'accès UP11 par l'intermédiaire du dispositif de conversion SB1.

Par le fait de la coupure, aucun signal n'est reçu au niveau des circuits de raccordement C5, C6 et du circuit pilote; les circuits C5 et C6 vont entreprendre le programme dont les ordinogrammes sont montrés aux figures 7 et 8; les circuits précités étant supposés en état de bon fonctionnement, le programme va se boucler sur les cases K42, K43, K44, K50, K42, tant qu'aucun signal permettant une synchronisation ne sera détecté. A la figure 16 qui représente ce cas, on n'a pas représenté de connexions puisque celles-ci changent périodiquement. La station pilote n'ayant pu obtenir la synchronisation du côté réception va effectuer le programme d'autotest (K103); comme avant la défaillance, le pilote étant considéré comme n'étant pas en veille, la branche du programme dont l'ordinogramme est montré à la figure 11 va être exécutée en commençant à la case K210. Le multiplex est émis sur toutes les lignes L11, L12, L21 et L22, le mot de commutation étant alors COM50; les circuits C2, C3 et P4 vont prendre la configuration indiquée à la figure 16, c'est-à-dire que la borne IN sera connectée aux accès DO11, DO12, DO21 et DO22, tandis que la borne OUT est reliée à la borne UP11 par l'intermédiaire du dispositif SB1.

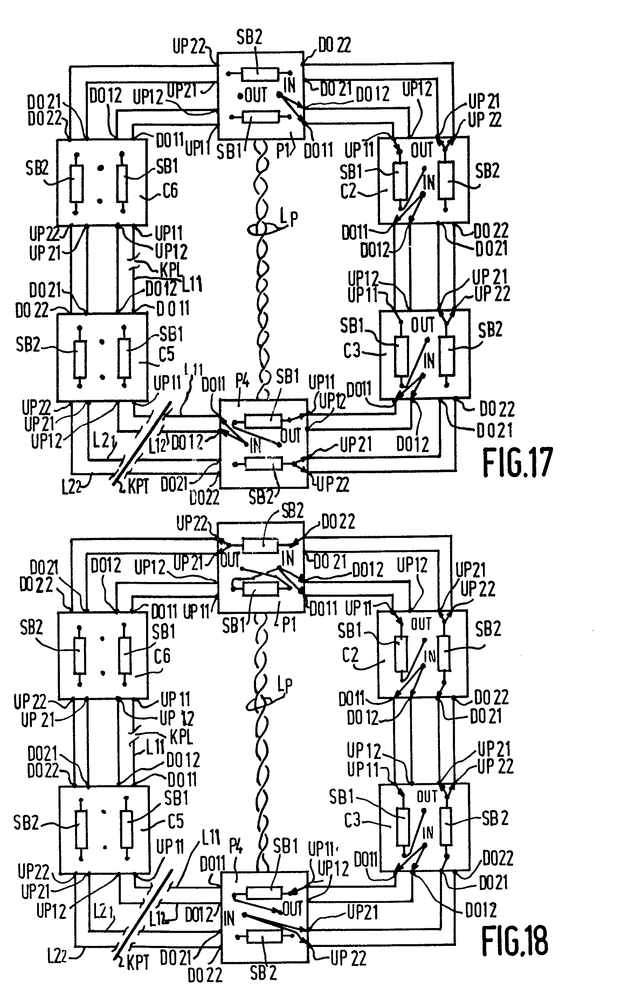

Le circuit pilote effectue alors les opérations indiquées à la case K251, ce qui va provoquer, au niveau des circuits C2, C3 et P4 qui seuls, reçoivent le multiplex, les connexions montrées à la figure 17 et correspondant au mot COM30; on remarquera les connexions s2-SU21 et s2-SU22, c'est-à-dire que la sortie du dispositif de synchronisation SB2 se trouve reliée aux accès UP21 et UP22; ceci prépare le retour du signal du multiplex.

Le programme du circuit pilote P1 passe à la case K252 et va provoquer l'envoi de l'ordre «av» au circuit le plus loin en aval, c'est d'abord le circuit C6 qui est adressé, puis le circuit C5; ces circuits ne peuvent recevoir cet ordre; c'est le circuit P4 qui va l'exécuter et c'est le mot COM32 (émis à la case K66, figure 9) qui va régir les connexions à l'intérieur du réseau SW du circuit P4. Le multiplex va alors surgir des accès UP21 et UP22 du circuit P4; le circuit C3 va détecter le signal sur le fil DD21 (case K80) et cela va provoquer les connexions à l'intérieur de SW commandées par le mot COM36; le circuit pilote P1 détecte la présence de signal sur l'accès DO22 (case K254), le mot COM39 (case K255) est alors envoyé dans le registre COM, de sorte que le signal disponible sur l'accès DO22 va alimenter la base de temps de réception BST. Ceci est montré à la figure 18.

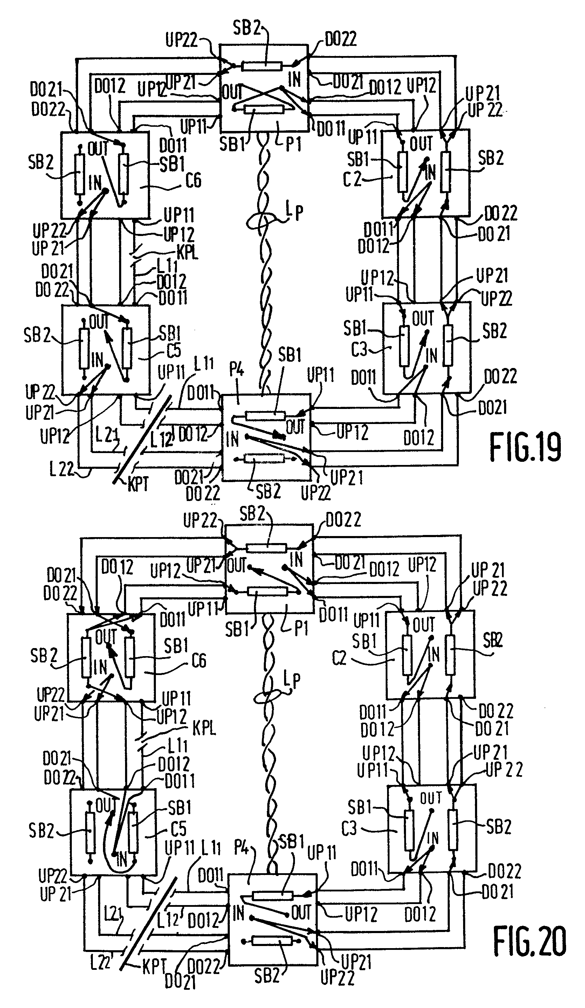

Cette base de temps BST va se synchroniser et le programme du circuit P1 abouti à la case K271. Le signal de retour est alors émis du côté amont du circuit P1 (voir figure 19). Les circuits C6 et C5 dont le programme était bouclé sur les cases K42, K43, K44 et K50 vont changer de configuration; les mots COM24 vont régir les connexions du réseau SW des circuits C6 et C5; le programme va alors se boucler sur les cases K95 et K97.

Le circuit pilote P1 va émettre l'ordre «am» accompagné de l'adresse du circuit situé juste en aval de celui qui a exécuté l'ordre «av» qui lui était particulier: C'est-à-dire que l'ordre «am» va être accompagné de l'adresse du circuit C5. Le programme de ce circuit va repartir à la case K51, déclenché par le signal d'interruption et va aboutir à la case K90 et, de là, à case K92. C'est le mot COM39 qui va régir les connexions à l'intérieur de C5. Du signal va apparaître uniquement à l'accès UP12 de C6 à cause de la coupure KPL; le programme de ce circuit va sortir de son bouclage et aboutir à la case K98; le mot COM40 est envoyé alors dans le registre COM. Le signal transmis par le circuit C6 vers le circuit pilote P1 va être détecté par celui-ci (voir cases K95 et K97); on aboutit, dans le programme, à la case K294 et le mot COM34 régit les connexions. Ceci est montré à la figure 20. Pour mettre le système en exploitation normale, la station pilote émet l'ordre «fr» accompagné de l'adresse générale, ce qui est reconnu par tous les circuits. Le programme de fonctionnement déclenché par le signal appliqué à l'entrée IRQ de l'ensemble muP redémarre le programme à la case K51 et aboutit à la case K68. Le système est donc apte à fonctionner de façon normale.

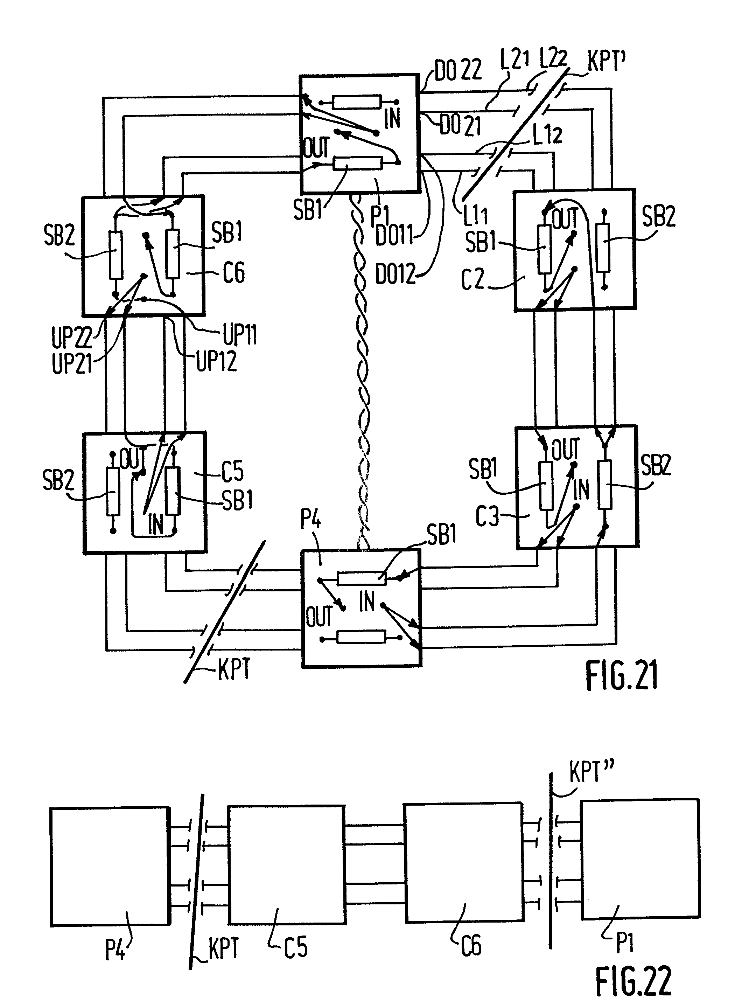

Il est intéressant d'examiner comment réagit le système de télécommunication de l'invention lorsqu'une double coupure intervient. Ce cas est représenté à la figure 21. Une première coupure référencée par KPT est située entre le circuit P4 et le circuit C5 et une deuxième coupure référencée par KPT' est située entre le circuit P1 et le circuit C2. On admet que le système était en fonctionnement normal et que les deux coupures KPT et KPT' sont survenues en même temps. Au niveau des circuits C2 et C5 va apparaître un signal actif sur les fils ALT. Le fonctionnement de ces circuits va être régi par le programme dont l'ordinogramme est montré à la figure 7. De ce fait, successivement le fonctionnement de tous les autres circuits de raccordement va se dérouler de la même manière, tandis que celui des circuits pilotes va être régi par le programme dont l'ordinogramme est montré à la figure 11. Il convient, dès lors, d'examiner plus précisément le fonctionnement de ces deux circuits pilotes. On se reporte alors à la case K111 (figure 11); les opérations vont déterminer le circuit pilote actif (par exemple, le circuit pilote P1) et le circuit pilote P4 sera mis en veille. La case K115 va définir le fonctionnement du circuit pilote en veille, comme il ne va pas se synchroniser, il faut considérer le point 3 de sortie de cette case K115. On aboutit à la case K120 où l'on met le code «ac» dans la mémoire P et, de là, on aboutit à la case K210, ce qui met dont le circuit pilote P4 actif. Ce circuit pilote P4 va donc engager, tout comme le circuit pilote P1 et d'une manière indépendante, un processus de reconfiguration, de sorte que, d'une part, les abonnés rattachés aux circuits C5 et C6 pourront échanger des informations et que, d'autre part, les abonnés rattachés aux circuits C2 et C3 pourront échanger de l'information aussi.

Si l'on effectue une réparation de ces coupures KPT et KPT', il faut rétablir le système dans son fonctionnement normal. Pour cela, à partir d'un des circuits pilotes P1 ou P4, on forme, au moyen du téléimprimeur, le code «malm»; ceci crée un signal sur l'entrée IRQ de l'ensemble muP et l'on se trouve à la case K218 et, de là, à la case K223, c'est-à-dire que l'on revient à la case K100, puis à la case K102 où l'on met «v» dans la mémoire P, ce qui va, par la suite, amener l'exécution des opérations indiquées K110, K112, K116, K117, puis K210. Du fait de l'opération indiquée à la case K116, l'autre circuit pilote sera mis à l'état de veille, alors que celui où le code «malm» a été formé restera actif. Le système sera alors mis en service normal.

On peut examiner le cas où l'on forme, dans un système en fonctionnement normal, le code «malm» au téléimprimeur d'un circuit pilote en veille. Ceci va interrompre la production de code de synchronisation du pilote qui est actif (voir case K221, figure 12), ce qui provoquera l'apparition du signal actif sur le fil ALT du circuit pilote à partir duquel le code «malm» a été formé. Les opérations de fonctionnement vont être définies par les cases K100, K101, K102, K103, K105, K106, K110, K111, K112, puis K116, K117, K106 et K210. Ce circuit pilote est donc, à partir de ce moment, à l'état actif. L'autre circuit pilote verra son fonctionnement régi par les opérations indiquées par les cases K100 à K105, puis K106, K110, K111, K112, K115, ce qui défini bien son état de veille.

A la figure 22, on a représenté le cas où survient une double coupure KPT et KPT' entre, d'une part, les circuits P4 et C5 et, d'autre part, C6 et P1. Pour remettre ces circuits, après réparation des lignes coupées, dans le système, on reforme, à partir d'un téléimprimeur d'un circuit pilote, le code «malm» et ces circuits sont insérés à nouveau dans le système.

Le système ainsi décrit peut être réalisé de façon différente sans pour cela sortir du cadre de l'invention. Notamment, les lignes L11, L12, L21, L22 peuvent être constituées par des fibres optiques. Il existe des dispositifs optiques susceptibles de remplir la fonction de court-circuit effectuée par les contacts KU11, ... KU22, KO11, ... KO22.

## Revendications

1, Système de télécommunication en boucle à multiplex temporel comportant une première et une deuxième ligne de transmission pour réunir une succession de circuits de raccordement, ces circuits de raccordement étant munis d'un premier accès amont pour recevoir de l'information de la première ligne de transmission transmettant celle-ci selon un premier sens de transmission et pour la fournir à des circuits d'abonnés qui leur sont rattachés par l'intermédiaire d'une entrée et d'une sortie de connexion pour circuits d'abonnés, d'un premier accès aval pour restituer l'information sur ladite première ligne de transmission, d'un second accès amont et d'un second accès aval pour être connectés sur la deuxième ligne de transmission, système comportant en outre, couplés à des moyens de détection de défaillance du système par rapport au service normal, des moyens pour engendrer des codes d'ordre en direction des circuits de raccordement pour pallier la défaillance du système par des connexions entre les accès et les entrées-sorties desdits circuits, caractérisé en ce qu'il est prévu des moyens de commande pour relier d'une part, en service normal, l'entrée des circuits d'abonnés sur l'un des accès amonts recevant de l'information tandis que la sortie de ces circuits abonnés est reliée aux accès avals de sorte que la première ligne de transmission et la deuxième ligne de transmission transmettent de l'information selon ledit premier sens et pour pouvoir relier sous l'influence desdits codes d'ordre l'entrée des circuits d'abonnés sur le deuxième accès aval et la sortie sur le deuxième accès amont, de sorte que la deuxième ligne de transmission transmet de l'information selon le sens inverse dudit premier sens.

2. Système de télécommunication en boucle selon la revendication 1, caractérisé en ce qu'au moins une ligne de transmission supplémentaire peut être couplée à la première et/ou à la deuxième ligne et peut se raccorder à des accès supplémentaires prévus sur les circuits de raccordement.

3. Système de télécommunication en boucle selon l'une des revendications 1 ou 2, caractérisé en ce que les moyens pour engendrer des codes d'ordre opèrent selon le procédé suivant, dit procédé de reconfiguration:

– émission d'un mot d'ordre aval pour tous les circuits de raccordement et pilote pour préparer le retour en sens inverse du sens de transmission précité du signal émis par le circuit pilote,
– émission successive de codes d'ordre aval particulier pour chacun des circuits de raccordement en commençant par celui qui est situé le plus loin pour que le premier circuit qui reçoit cet ordre le retourne via une ligne de transmission vers le circuit pilote, le signal étant ensuite envoyé du côté aval,
– émission successive de codes d'ordre amont particulier pour chacun des circuits de raccordement en commençant par celui situé en aval de celui qui a exécuté le code d'ordre aval particulier,
– mise en service du système à la réception par le circuit pilote du signal du côté amont pour que l'échange d'information en circuits d'abonnés puisse se produire.

4. Système de télécommunication selon l'une des revendications 1 à 3, caractérisé en ce que les circuits de raccordement comportent, commandés par des moyens de détection de défaillance du circuit de raccordement, des circuits de court-circuit pour court-circuiter les accès amont avec les accès aval.

5. Système de télécommunication en boucle selon la revendication 4, caractérisé en ce que les circuits de raccordement comportent des moyens pour exécuter un programme d'autotest pendant l'établissement des courts-circuits.

6. Système de télécommunication en boucle selon l'une des revendications 1 à 5, caractérisé en ce qu'il comporte deux circuits pilotes pouvant être mis à l'état de veille et à l'état actif, un circuit pilote à l'état actif produisant le multiplex, un circuit pilote à l'état de veille assurant des fonctions de raccordement entre accès semblables à celles des circuits de raccordement.

7. Système de télécommunication en boucle selon la revendication 6, caractérisé en ce que les deux circuits pilotes sont réunis par une ligne de circuit pilote pour transmettre des ordres de mise en veille de l'un vers l'autre circuit pilote.

8. Système de télécommunication en boucle selon la revendication 6 ou 7, caractérisé en ce qu'il est prévu, au niveau des circuits pilotes, des moyens pour lancer un programme de télésurveillance consistant:

- à partir d'un circuit pilote à l'état de veille, en l'envoi périodique de code de télésurveillance via les lignes de transmission vers le circuit pilote à l'état actif,
- en l'envoi, à partir du pilote actif, d'un code d'accusé réception si le code de télésurveillance a été reçu,
- en la mise à l'état actif du circuit pilote à l'état de veille, en cas de non retour du code d'accusé réception.

9. Système de télécommunication en boucle selon l'une des revendications 1 à 8 dans lequel il est prévu, au niveau de chaque circuit de raccordement et de circuit pilote, un circuit de synchronisation raccordé à un accès recevant de l'information et fournissant un signal d'alarme de synchronisation lorsque celle-ci ne peut être obtenue, caractérisé en ce que ce signal d'alarme déclenche la mise en œuvre d'un programme d'insertion consistant, pour les circuits de raccordement et pour le circuit pilote à l'état de veille, en:
- la mise en court-circuit des accès, puis en
- la sélection d'un accès recevant de l'information et, enfin, en
- la sélection d'accès pour la sortie d'information.

10. Système de télécommunication en boucle selon la revendication 9, caractérisé en ce que ledit signal d'alarme déclenche, pour un circuit pilote à l'état actif, un programme de pilote actif qui consiste, après la mise en court-circuit des accès, en la production du multiplex.

11. Système de télécommunication en boucle selon la revendication 9 ou 10, caractérisé en ce qu'il est prévu, au niveau de chaque circuit de raccordement, un circuit de détection de la mise sous tension du circuit de raccordement pour déclencher aussi la mise en œuvre du programme d'insertion.

12. Système de télécommunication en boucle selon l'une des revendications 9 à 11, caractérisé en ce qu'au niveau de chaque circuit pilote il est prévu un dispositif de commande manuel pour déclencher, pour un pilote actif, la mise en œuvre du programme de pilote actif et pour un pilote en veille, l'envoi de l'ordre de mise en veille vers l'autre pilote.

13. Système de télécommunication en boucle selon l'une des revendications 1 à 12, caractérisé en ce que les lignes sont constituées de fils métalliques.

14. Système de télécommunication en boucle selon l'une des revendications 1 à 12, caractérisé en ce que les lignes sont constituées par des fibres optiques.

**Patentansprüche**

1. Zeitmultiplex-Schleifenfernmeldesystem mit einer ersten und einer zweiten Übertragungsleitung zum Verbinden einer Reihe von Verbindungskreise, wobei diese Verbindungskreise mit einem ersten Aufwärts-Zugriffspunkt zum Erhalten von Informationen von der ersten Übertragungsleitung, welche diese in einer ersten Übertragunsrichtung überträgt und zum Liefern dieser Informationen zu Teilnehmerkreisen, die damit verbunden sind mittels eines Verbindungseinganges und eines Verbindungsausganges für Teilnehmerkreise, einem ersten Abwärts-Zugriffspunkt zum Ablegen der Informationen an der genannten ersten Übertragungsleitung, einem zweiten Aufwärts-Zugriffspunkt und einem zweiten Abwärts-Zugriffspunkt zur Verbindung mit der zweiten Übertragungsleitung versehen sind, wobei dieses System ausserdem Mittel aufweist, die mit Mitteln gekoppelt sind zum Detektieren des Systemzusammenbruches gegenüber dem normalen Betrieb, zum Erzeugen von Befehlscodes für die Verbindungskreise zum Aufheben des Systemzusammenbruches mittels Verbindungen zwischen den Zugriffspunkten und den Eingängen-Ausgängen der genannten Kreise, dadurch gekennzeichnet, dass Steuermittel vorgesehen sind um im normalen Betrieb den Eingang der Teilnehmerkreise mit einem der Aufwärts-Zugriffspunkte zu verbinden, der Informationen erhält, während der Ausgang dieser Teilnehmerkreise derart mit Abwärts-Zugriffspunkten verbunden ist, dass die erste Übertragungsleitung und die zweite Übertragungsleitung Informationen in der genannten ersten Richtung senden und um unter dem Einfluss der genannten Befehlscodes den Eingang der Teilnehmerkreise mit dem zweiten Abwärts-Zugriffspunkt und den Ausgang mit dem zweiten Aufwärts-Zugriffspunkt verbinden zu können und zwar derart, dass die zweite Übertragungsleitung die Informationen in der der ersten entgegengesetzten Richtung überträgt.

2. Schleifenfernmeldesystem nach Anspruch 1, dadurch gekennzeichnet, dass mindestens eine zusätzliche Übertragungsleitung mit der ersten und/oder zweiten Leitung gekoppelt und mit in den Verbindungskreisen vorgesehenen zusätzlichen Zugriffspunkten verbunden sein kann.

3. Schleifenfernmeldesystem nach einem der Ansprüche 1 oder 2, dadurch gekennzeichnet, dass die Mittel zum Erzeugen der Befehlscodes entsprechend dem untenstehenden Verfahren, das als Neu-Konfigurationsverfahren bezeichnet wird, arbeiten:

- das Aussenden eines Abwärts-Befehlswortes für alle Verbindungs- und Pilotkreise zum Vorbereiten der Rückkehr in der der genannten Übertragungsrichtung des von dem Pilotkreis gesendeten Signals entgegengesetzten Richtung,
– das nacheinander Aussenden von Abwärts-Sonder-Befehlscodes für jeden der Verbindungskreise, ausgehend von demjenigen, der am nächsten liegt, damit der erste Kreis, der diesen Befehl erhält, diesen Befehl über eine Übertragungsleitung zu dem Pilotkreis zurückführt, wobei das Signal danach an der Abwärtsseite abgesetzt wird,
– das nacheinander Aussenden von Aufwärts-Sonder-Befehlscodes für jeden der Verbindungskreise, ausgehend von demjenigen, der stromabwärts von demjenigen liegt, der den Abwärts-Sonder-Befehlscode verarbeitet hat,
– das Inbetriebsetzen des Systems wenn der Pilotkreis das Aufwärtssignal empfängt, damit zwischen den Teilnehmerkreisen Informationen ausgetauscht werden können.

4. Fernmeldesystem nach einem der Ansprüche 1 bis 3, dadurch gekennzeichnet, das die Verbindungskreise durch Detektionsmittel zum Detektieren des Zusammenbruches des Verbindungskreises gesteuerte Kurzschlusskreise aufweisen um die Aufwärts-Zugriffspunkte mit den Abwärts-Zugriffspunkten kurzzuschliessen.

5. Schleifenfernmeldesystem nach Anspruch 4, dadurch gekennzeichnet, dass die Verbindungskreise Mittel aufweisen zum Durchführen eines Selbstüberprüfungsprogramms während der Bildung der Kurzschlüsse.

6. Schleifenfernmeldesystem nach einem der Ansprüche 1 bis 5, dadurch gekennzeichnet, dass das System zwei Pilotkreise aufweist, die in einen Bereitschaftszustand und einen aktiven Zustand gebracht werden können, wobei ein Pilotkreis in dem aktiven Zustand den Multiplex erzeugt und wobei ein Pilotkreis in dem Bereitschaftszustand Verbindungsfunktionen zwischen Zugriffspunkten gewährleistet ähnlich wie die der Verbindungskreise.

7. Schleifenfernmeldesystem nach Anspruch 6, dadurch gekennzeichnet, dass die zwei Pilotkreise durch eine Pilotkreisleitung miteinander verbunden sind um von dem einen Pilotkreis zu dem anderen Bereitschaftsbefehle zu übertragen.

8. Schleifenfernmeldesystem nach Anspruch 6 oder 7, dadurch gekennzeichnet, dass bei den Pilotkreisen Mittel zu Starten eines Fernüberwachungsprogramms vorgesehen sind, die folgendes durchführen:

– ausgehend von einem Pilotkreis im Bereitschaftszustand, das periodische Aussenden eines Fernüberwachungscodes über die Übertragungsleitungen zu dem Pilotkreis in dem aktiven Zustand,
– ausgehend von dem aktiven Piloten, das Aussenden eines Bestätigungscodes, wenn der Fernüberwachungscode empfangen worden ist,
– das in den aktiven Zustand Bringen des Pilotkreises, der sich in dem Bereitschaftszustand befindet, in dem Fall, wo der Bestätigungscode nicht zurückgekehrt ist.

9. Schleifenfernmeldesystem nach einem der Ansprüche 1 bis 8, in dem bei jedem Verbindungskreis und bei jedem Pilotkreis ein Synchronisierkreis vorgesehen ist, der mit einem Zugriffspunkt verbunden ist, der Informationen erhält und ein Synchronisationsalarmsignal liefert, wenn diese Information nicht erhalten werden kann, dadurch gekennzeichnet, dass dieses Alarmsignal das Inbetriebsetzen eines Einfügungsprogramms auslöst, das für die Verbindungskreise und für den Pilotkreis in dem Bereitschaftszustand aus den folgenden Massnahmen besteht:

– das Kurzschliessen der Zugriffspunkte und danach
– das Selektieren eines Zugriffspunktes, der die Information erhält und zum Schluss
– das Selektieren des Zugriffspunktes zum Abgeben der Information.

10. Schleifenfernmeldesystem nach Anspruch 9, dadurch gekennzeichnet, dass das genannte Alarmsignal für einen Pilotkreis in dem aktiven Zustand ein Aktivpilotprogramm auslöst, das daraus besteht, dass nach dem Kurzschliessen der Zugriffspunkte der Multiplex erzeugt wird.

11. Schleifenfernmeldesystem nach Anspruch 9 oder 10, dadurch gekennzeichnet, dass bei jedem Verbindungkreis ein Detektionskreis vorgesehen ist zum Detektieren, ob der Verbindungskreis gespeist wird um auch das Einfügungsprogramm auszulösen.

12. Schleifenfernmeldesystem nach einem der Ansprüche 9 bis 11, dadurch gekennzeichnet, dass bei jedem Pilotkreis einen handbetätigte Steueranordnung vorgesehen ist um für einen aktiven Piloten das Aktivpilotprogramm in Betrieb zu setzen und für einen Bereitschaftspiloten dem anderen Piloten das Bereitschaftsbefehlssignal zuzuführen.

13. Schleifenfernmeldesystem nach einem der Ansprüche 1 bis 12, dadurch gekennzeichnet, dass die Leitungen aus Metalldrähten bestehen.

14. Schleifenfernmeldesystem nach einem der Ansprüche 1 bis 12, dadurch gekennzeichnet, dass die Leitungen aus optischen Fasern bestehen.

**Claims**

1. A time-division multiplex loop telecommunication system comprising a first and a second transmission line for linking a sequence of connection circuits, these connection circuits having a first up-lipe access port to receive the information from the first transmission line transmitting this information in a first transmission direction and to apply it to subscriber circuits which are connected to these connection circuits via a connection input and a connection output for subscriber circuits, a first down-line access port for recovering the information on said first transmission line, a second up-line access port and a second down-line access port for connection to the second transmission line, the system moreover including, coupled to system failure detection means with respect to the normal service, means for generating order codes in the direction of the connection circuits for obviating the malfunctioning of the system by connections between the access ports and the input-outputs of said circuits, characterized in that control means are provided to connect on the one hand, in normal service, the input of the subscriber circuits to one of the up-line access ports receiving the information whilst the output of these subscriber circuits are connected to the down-line access ports such that the first transmission line and the second transmission line transmit the information in said first direction and to enable the connection in response to said order codes of the input of the subscribers circuits to the second down-line access port and the output to the second up-line access port, such that the second transmission line transmits the information in the direction opposite to the first direction.

2. A loop telecommunication system as claimed in Claim 1, characterized in that at least one additional transmission line can be coupled to the first and/or the second line and be connected to additional access ports provided in the connection circuits.

3. A loop telecommunication system as claimed in one of the Claims 1 or 2, characterized in that the means for generating order codes operate on the basis of the following so-called reconfiguration procedure:

- the transmission of a down-line order word for all the connection and pilot circuits for preparing the return transmission in the direction opposite to the aforesaid direction of the transmission of the signal transmitted by the pilot circuit,
- the transmission of successive specific down-line order codes for each of the connection circuits starting from the most remote code in order that the first circuit which receives this order returns it via a transmission line to the pilot circuit, the signal thereafter being conveyed from the down-line side,

- the successive transmission of specific up-line order codes for each of the connection circuits starting from the code down-line of the connection circuit which has effected the specific down-line order code,
- making the system operative on reception by the pilot circuit of the signal from the up-line side in order that the exchange of information can be effected in the subscriber circuits.

4. A telecommunication system as claimed in one of the Claims 1 to 3, characterized in that the connection circuits include, controlled by the connection circuit failure detection means, short-circuiting circuits for short circuiting the up-line access port with the down-line access port.

5. A loop telecommunication system as claimed in Claim 4, characterized in that the connection circuits include means for performing a self-test program during the establishment of the short circuits.

6. A loop telecommunication system as claimed in any one of the Claims 1 to 5, characterized in that it includes two pilot circuits which can be adjusted to the stand by and to the active state, a pilot circuit in the active state producing the multiplexing signal, a pilot circuit in the stand by state providing the connection functions between access ports similar to those of the connection circuit.

7. A loop telecommunication system as claimed in Claim 6, characterized in that the two pilot circuits are interconnected by a pilot line circuit for transmitting the commands to set one circuit in the stand by state with respect to the other pilot circuit.

8. A loop telecommunication system as claimed in Claim 6 or 7, characterized in that in the region of the pilot circuits, means are provided for initiating a remote supervising program consisting:
- in periodically conveying from a pilot circuit in the stand by state, a remote supervision code through the transmission lines towards the pilot circuit in the active state,
- in conveying, from the active pilot circuit, a reception acknowledgement code when the remote supervising code has been received,
- adjusting the pilot circuit from the active state to the stand by state, when the reception acknowledgement code is not returned.

9. A loop telecommunication system as claimed in any one of the Claims 1 to 8 in which, in the region of each connection circuit and each pilot circuit, a synchronizing circuit is provided connected to an access port receiving the information and producing a synchronizing alarm signal when synchronization has not been obtained, characterized in that the alarm signal triggers in insertion program consisting, for the connection circuits and the pilot circuit in the stand by state in:

- short circuiting the access ports, thereafter
- in the selection of an access port receiving the information and, finally,
- in the selection of the access port for outputting information.

10. A loop telecommunication system as claimed in Claim 9, characterized in that said alarm signal triggers, for a pilot circuit in the active state, an active pilot program which after the access ports have been short circuited, consists in effecting the multiplexing operation.

11. A loop telecommunication system as claimed in Claim 9 or 10, characterized in that, in the region of each connection circuit, a circuit is provided for detecting voltage supply to the connection circuit to trigger into the insertion program.

12. A loop telecommunication system as claimed in any one of the Claims 9 to 11, characterized in that in the region of each pilot circuit a manual control arrangement is provided for triggering, for an active pilot, the active pilot program and for a pilot circuit in the stand by state, the conveyance of the stand by state command to the other pilot.

13. A loop telecommunication system as claimed in any one of the Claims 1 to 12, characterized in that the lines are metal wires.

14. A loop telecommunication system as claimed in any one of the Claims 1 to 12, characterized in that the lines are optical fibres.

FIG.3

FIG.1

TR        TS          TS          TS          TS                    TR

MPX ⊠━━━┳━━━━━━┳━━━━━━┳━━━━━━┳━━━━━━━━━⫽━━━⊠

FIG.2

GL2

GL1

GL1 ⟋     ⟍ GL2

FIG.4

FIG.5

FIG.6

FIG.7

FIG.8

FIG.9

FIG.10

FIG.13

FIG.11

FIG.12

FIG.14a

FIG.14b

FIG.15

FIG.16

FIG.17

FIG.18

FIG.19

FIG.20

FIG.21

FIG.22

45